(19) Europäisches Patentamt / European Patent Office / Office européen des brevets

(11) **EP 3 814 828 B1**

(12) **EUROPÄISCHE PATENTSCHRIFT**

(45) Veröffentlichungstag und Bekanntmachung des Hinweises auf die Patenterteilung:
**23.08.2023  Patentblatt 2023/34**

(21) Anmeldenummer: **19734058.1**

(22) Anmeldetag: **25.06.2019**

(51) Internationale Patentklassifikation (IPC):
**G02B 27/00** (2006.01)    **G02C 7/02** (2006.01)
**G02C 7/06** (2006.01)

(52) Gemeinsame Patentklassifikation (CPC):
**G02C 7/028; G02B 27/0025; G02C 7/027; G02C 7/063;** G02C 2202/08

(86) Internationale Anmeldenummer:
**PCT/EP2019/066879**

(87) Internationale Veröffentlichungsnummer:
**WO 2020/002355 (02.01.2020 Gazette 2020/01)**

(54) **COMPUTERIMPLEMENTIERTES VERFAHREN, DATENVERARBEITUNGSSYSTEM ZUM ERZEUGEN EINES ZIELDESIGNS SOWIE COMPUTERPROGRAMM, SPEICHERMEDIUM MIT INSTRUKTIONEN ZUM ERZEUGEN EINES ZIELDESIGNS, VERFAHREN ZUM BEREITSTELLEN EINES BRILLENGLASES, SPEICHERMEDIUM MIT EINER NUMERISCHEN DARSTELLUNG EINES BRILLENGLASES UND VERFAHREN ZUM HERSTELLEN EINES BRILLENGLASES**

COMPUTER-IMPLEMENTED METHOD, DATA PROCESSING SYSTEM FOR PRODUCING A TARGET DESIGN AND COMPUTER PROGRAM, STORAGE MEDIUM HAVING INSTRUCTIONS FOR PRODUCING A TARGET DESIGN, METHOD FOR PROVIDING A SPECTACLE LENS, STORAGE MEDIUM HAVING A NUMERICAL REPRESENTATION OF A SPECTACLE LENS AND METHOD FOR MANUFACTURING A SPECTACLE LENS

PROCÉDÉ MIS EN ?UVRE PAR ORDINATEUR, SYSTÈME DE TRAITEMENT DE DONNÉES POUR LA GÉNÉRATION D'UNE CONCEPTION CIBLE AINSI QUE PROGRAMME INFORMATIQUE, SUPPORT DE STOCKAGE COMPRENANT DES INSTRUCTIONS POUR LA GÉNÉRATION D'UNE CONCEPTION CIBLE, PROCÉDÉ POUR LA FOURNITURE D'UN VERRE DE LUNETTES, SUPPORT DE STOCKAGE COMPRENANT UNE REPRÉSENTATION NUMÉRIQUE D'UN VERRE DE LUNETTES ET PROCÉDÉ POUR LA FABRICATION D'UN VERRE DE LUNETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2018  DE 102018115412**

(43) Veröffentlichungstag der Anmeldung:
**05.05.2021  Patentblatt 2021/18**

(73) Patentinhaber: **Carl Zeiss Vision International GmbH**
**73430 Aalen (DE)**

(72) Erfinder: **WELSCHER, Markus**
**73492 Rainau (DE)**

(74) Vertreter: **PATERIS Patentanwälte PartmbB**
**Danckelmannstraße 9**
**14059 Berlin (DE)**

(56) Entgegenhaltungen:
**JP-A- 2005 201 971**

• **C Brooks: "Lens Design" In: "System for Ophthalmic Dispensing", 1. Januar 2007 (2007-01-01), Elsevier, XP055625278, ISBN: 978-0-7506-7480-5 Seiten 402-430, DOI: 10.1016/B978-0-7506-7480-5.50022-8, Seite 421**

- Darryl Meister: "Personalized Lenses by ZEISS Zeiss Individual Progressive Lenses: The Optics of Truly Customized Progressive Lenses", , 27. September 2009 (2009-09-27), XP055624811, Gefunden im Internet: URL:https://pdfs.semanticscholar.org/a627/809b1a0a06ae9dde81846b3ca530495e1068.pdf [gefunden am 2019-09-20]
- C Brooks: "Chapter 18: Lens Design" In: "System for Ophthalmic Dispensing", 1 January 2007 (2007-01-01), Elsevier, US, XP055625278, ISBN: 978-0-7506-7480-5 pages 402-430, DOI: 10.1016/B978-0-7506-7480-5.50022-8, * *
- Darryl Meister: "Personalized Lenses by ZEISS Zeiss Individual Progressive Lenses: The Optics of Truly Customized Progressive Lenses", , 27 September 2009 (2009-09-27), XP055624811, Retrieved from the Internet: URL:https://pdfs.semanticscholar.org/a627/809b1a0a06ae9dde81846b3ca530495e1068.pdf [retrieved on 2019-09-20]
- Darryl Meister ET AL: "INTRODUCTION TO OPHTHALMIC OPTICS", , 3 June 2010 (2010-06-03), XP055734787, Retrieved from the Internet: URL:http://64.50.176.246/files/introduction_to_ophthalmic_optics.pdf [retrieved on 2020-09-29]

**Beschreibung**

Die vorliegende Erfindung betrifft ein computerimplementiertes Verfahren und ein Datenverarbeitungssystem zum Erzeugen eines Zieldesigns, welches zur Verwendung beim Optimieren eines Brillenglases geeignet ist. Daneben betrifft die Erfindung ein Computerprogramm sowie ein nichtflüchtiges computerlesbares Speichermedium mit Instruktionen zum Erzeugen eines derartigen Zieldesigns. Weiterhin betrifft die Erfindung ein Verfahren zum Bereitstellen eines Brillenglases, sowie ein Verfahren zum Herstellen eines Brillenglases.

Brillengläser lassen sich in solche mit nur einer dioptrischen Wirkung, sog. Einstärken-Brillengläser gemäß DIN ISO 13666:2013-10 Abschnitt 8.3.1, und solche mit unterschiedlichen fokussierenden Wirkungen, sogenannte Mehrstärken-Brillengläser gemäß DIN ISO 13666:2013-10, Abschnitt 8.3.2 einteilen. Der Begriff "dioptrische Wirkung" bildet einen Sammelbegriff für die fokussierende Wirkung und die prismatische Wirkung des Brillenglases, der Begriff "fokussierende Wirkung" bildet wiederum einen Sammelbegriff für die sphärische Wirkung, gemäß der ein paraxiales, paralleles Strahlenbündel auf einen Punkt fokussiert wird (DIN ISO 13666:2013-10, Abschnitt 11.1) und die in einer Verordnung üblicherweise durch einen Wert "Sphäre" berücksichtigt wird, und die astigmatische Wirkung des Brillenglases, gemäß der ein paraxiales, paralleles Strahlenbündel auf zwei zueinander senkrecht verlaufende Brennlinien fokussiert wird (DIN ISO 13666:2013-10, Abschnitt 12.1) und die in einer Verordnung üblicherweise durch einen Wert "Zylinder" berücksichtigt wird. Ein Strahlenbündel soll im Rahmen der vorliegenden Beschreibung als ein paraxiales Strahlenbündel angesehen werden, wenn es einen Durchmesser von 0,05 mm, insbesondere von 0,01 mm nicht überschreitet. Der Wert "Sphäre" bezeichnet dabei gemäß, DIN ISO 13666:2013-10, Abschnitt 11.2 den bildseitigen Scheitelbrechwert eines Brillenglases mit sphärischer Wirkung oder den Scheitelbrechwert in einem der beiden Hauptschnitte eines Brillenglases mit astigmatischer Wirkung. Ein Hauptschnitt ist hierbei gemäß DIN ISO 13666:2013-10, Abschnitt 7.4 diejenige Meridianebene einer Fläche mit maximaler oder minimaler gemessener Krümmung dieser Fläche, wobei der Begriff "Meridianebene" gemäß DIN ISO 13666:2013-10, Abschnitt 5.7.1 eine Ebene bezeichnet, die den oder die Krümmungsmittelpunkt(e) einer Fläche beinhaltet. Unter einem Hauptschnitt eines Brillenglases mit astigmatischer Wirkung ist gemäß DIN ISO 13666:2013-10, Abschnitt 12.2 insbesondere einer der beiden zueinander senkrechten Meridianebenen zu verstehen, die zu den beiden Brennlinien parallel sind. Der Wert "Zylinder" bezeichnet dabei gemäß, DIN ISO 13666:2013-10, Abschnitt 12.5 die astigmatische Differenz welche gemäß DIN ISO 13666:2013-10, Abschnitt 12.4 die Differenz zwischen dem Scheitelbrechwert im ersten Hauptschnitt und dem Scheitelbrechwert im zweiten Hauptschnitt eines Brillenglases mit astigmatischer Wirkung ist, in Bezug auf den ersten oder den zweiten Hauptschnitt. Die Richtung des Hauptschnittes, der als Bezug herangezogen wird, ist gemäß DIN ISO 13666:2013-10, Abschnitt 12.6 durch den Winkel "Achse" gekennzeichnet. Gemäß DIN ISO 13666:2013-10, Abschnitt 12.2.1 ist der erste Hauptschnitt dabei der Hauptschnitt mit dem kleineren Brechwert, der zweite Hauptschnitt DIN ISO 13666:2013-10, Abschnitt 12.2.2 der Hauptschnitt mit dem größeren Brechwert.

Die Verwendung mehrerer fokussierender Wirkungen ermöglicht dem Träger der Brille eine Korrektion von Sehfehlern sowohl im Nah- als auch im Fernteil mit einem einzigen Brillenglas. Ist der Wirkungsübergang zwischen dem Fernteil und dem Nahteil fließend, so spricht man von Gleitsicht-Brillengläsern, wie sie in DIN ISO 13666:2013-10, Abschnitt 8.3.5 definiert sind: Ein Gleitsicht-Brillenglas ist ein Brillenglas mit mindestens einer Gleitsichtfläche und einer zunehmenden (positiven) Wirkung, wenn der Brillenträger nach unten blickt. Eine Gleitsichtfläche bezeichnet nach Abschnitt 7.7 der Norm DIN ISO 13666:2013-10 eine nichtrotationssymmetrische Fläche mit einer kontinuierlichen Änderung der Krümmung über die gesamte Fläche oder einen Teil davon, die im Allgemeinen dazu dient, einen zunehmenden Nahzusatz oder eine Degressionswirkung bereitzustellen.

Gleitsichtgläser lassen sich heutzutage auf der Basis der vermessenen Refraktion eines Patientenauges individuell an das vermessene Auge anpassen. Hierzu wird wenigstens eine der Brillenglasflächen, häufig die Rückfläche oder augenseitige Fläche, die bestimmungsgemäß in der Brille dem Auge zugewandt liegt (DIN ISO 13666:2013-10, Abschnitt 5.9) mit einer Freiformfläche versehen. Eine Freiformfläche stellt dabei eine Fläche dar, die während der Herstellung frei formbar ist und insbesondere keine Achsensymmetrie und keine Rotationssymmetrie aufzuweisen zu braucht und in unterschiedlichen Bereichen des Brillenglases unterschiedliche Wirkungen (sphärisch und/oder astigmatisch und/oder prismatisch) erzeugt. Im weiteren Sinn versteht man unter einer Freiformfläche eine komplexe Fläche, die sich insbesondere mittels gebietsweise definierter Funktionen, insbesondere zweimal stetig differenzierbarer gebietsweise definierter Funktionen darstellen lässt. Beispiele für geeignete gebietsweise definierte Funktionen sind (insbesondere stückweise) polynomiale Funktionen (insbesondere polynomiale Splines, wie z.B. bikubische Splines, höhergradige Splines vierten Grades oder höher, Zernike-Polynome, Forbes-Flächen, Tschebyschew-Polynome, polynomiale non-uniform rational B-Splines (NURBS)) oder Fourierreihen. Hiervon zu unterscheiden sind einfache Flächen, wie z.B. sphärische Flächen, asphärische Flächen, zylindrische Flächen, torische Flächen, atorische Flächen oder auch die auf S. 12, Z. 6-13 der WO 89/04986 A1 beschriebenen Flächen, die zumindest längs einer Hauptschnitt als Kreis beschrieben sind. Eine Freiformfläche im engeren Sinn entsprechend dem Abschnitt 2.1.2 der DIN SPEC 58194 vom Dezember 2015 ist eine in Freiformtechnologie gefertigte Brillenglasfläche, die im Rahmen der Grenzen der Differentialgeometrie mathematisch beschrieben wird und weder punkt- noch achsensymmetrisch ist.

Die Herstellung von Freiformflächen auf einem Brillenglas erfolgt in der Regel durch spanendes Bearbeiten des Brillenglases, also beispielsweise durch Fräsen, im Rahmen eines CNC-Verfahrens, indem die Freiformfläche numerisch gesteuert auf der Basis einer mathematischen Beschreibung der Fläche hergestellt wird. Die mathematische Beschreibung der Freiformfläche erfolgt typischerweise mit Hilfe von gebietsweise definierten Funktionen. Eine gebietsweise definierte Funktion ist dabei eine Funktion, die zwischen Gitterpunkten eines in der Regel ebenen zweidimensionalen Gitters definiert ist, beispielsweise auf einer Rechteckfläche eines Rechteckgitters, und die eine Teilfläche der Freiformfläche beschreibt. Wenn das Rechteckgitter bspw. der in der x-y-Ebene eines kartesischen Koordinatensystems liegt, können die gebietsweise definierten Funktionen Funktionen der x-Koordinate und der y-Koordinate sein. Ihre Funktionswerte bilden dann die einem Punkt in der x-y-Ebene zugeordnete z-Koordinate, und die Menge aller z-Koordinaten einer gebietsweise definierten Funktion bildet eine Teilfläche der Freiformfläche. Im einfachsten Fall sind die Punkte der Freiformfläche dann an jedem Ort der x-y-Ebene durch die z-Koordinate gegeben. Mit anderen Worten, die Funktionswerte der gebietsweise definierten Funktionen geben die jeweilige Höhe eines Punktes der Freiformfläche über einem Punkt der x-y-Ebene an. Die gebietsweise definierten Funktionen werden in der Regel so bestimmt, dass die Übergänge zu den auf den benachbarten Gitterflächen definierten gebietsweise definierten Funktionen zumindest in der ersten Ableitung, vorzugsweise auch in der zweiten Ableitung stetig sind. Sind die gebietsweise definierten Funktionen Polynome, spricht man von Splines.

Das Bestimmen des mathematischen Modells der Freiformfläche erfolgt durch ein Optimierungsverfahren, in dem ein zu erreichendes optisches Zieldesign oder ein zu erreichendes Flächenzieldesign vorgegeben wird. Ein optisches Zieldesign ist eine Verteilung bzw. eine Vorgabe von Bildfehlern über das gesamte Brillenglas oder aber auch darüber hinaus im Brillenträgerstrahlengang (z.B. astigmatische Restabweichung, sphärische Restabweichung, Prisma, Horizontalsymmetrie, Verzeichnung, aber auch Fehler höherer Ordnung wie z.B. Koma). Zusätzlich kann das optische Zieldesign noch Vorgaben für die astigmatischen und sphärischen Restabweichungen an Bezugspunkten (z.B. Fern-Konstruktionsbezugspunkt oder Nah-Konstruktionsbezugspunkt) oder die Addition im Messstrahlengang eines Messgerätes (z.B. Scheitelbrechwertmessgerät) enthalten. Im optischen Zieldesign ist bspw. die Verteilung der mit einem Brillenglas zu erzielenden Werte für den zulässigen sphärischen Restfehler des Brillenglases und für den zulässigen astigmatischen Restfehler im sogenannten Brillenträgerstrahlengang, d.h. in einem Strahlengang, der durch die Augenpupille bzw. durch den Augendrehpunkt verläuft, angegeben. Typischerweise sind diese Restfehler in Form von Einzelwerten an einer Vielzahl von Punkten auf der Vorderfläche des Brillenglases (also der vom Auge abzuwendenden Seite des Brillenglases), den sog. Optimierpunkten definiert. Unter dem sphärischen Restfehler ist dabei die Abweichung der von dem Brillenglas verursachten sphärischen Korrektur von der verordnungsgemäßen sphärischen Korrektur zu verstehen, unter dem astigmatischen Restfehler die Abweichung der von dem Brillenglas verursachten astigmatischen Korrektur von der verordnungsgemäßen astigmatischen Korrektur. Im Rahmen einer Strahlrechnung zum Berechnen der Verteilung der Werte für den sphärischen und den astigmatischen Restfehler über das gesamte Brillengas finden Strahlenbündel Verwendung, von denen jeweils ein Strahl, im Folgenden Hauptstrahl genannt, außer durch das Brillenglas auch durch den Augendrehpunkt verläuft, wobei die Hauptstrahlen an den Optimierpunkten durch die vordere Brillenglasfläche hindurchtreten. Dabei werden in der Regel die Gebrauchsbedingungen des jeweiligen Brillenglases berücksichtigt und die Freiformfläche für die jeweiligen Gebrauchsbedingungen optimiert. Die Gebrauchsbedingungen lassen sich bspw. durch den Vorneigungswinkel (DIN ISO 13666:2013-10, Abschnitt 5.18), auch pantoskopischer Winkel genannt, den Fassungsscheibenwinkel (DIN ISO 13666:2013-10, Abschnitt 17.3) und den Hornhaut-Scheitelabstand (DIN ISO 13666:2013-10, Abschnitt 5.27) angeben und sind für jedes Brillenglas an den jeweiligen Träger angepasst. Der Begriff "Vorneigungswinkel" bezeichnet dabei einen Winkel in der Vertikalebene zwischen der Normale zur Vorderfläche eines Brillenglases in dessen Mittelpunkt nach Kastensystem (System von Maßen und Definitionen, das auf einem Rechteck beruht, welches durch die horizontalen und vertikalen Tangenten an die äußersten Kanten des Brillenglases oder Brillenglasblanks gebildet wird) und der Fixierlinie des Auges in Primärposition, die üblicherweise als horizontal angenommen wird (Nullblickrichtung). Unter dem Begriff "Fassungsscheibenwinkel" ist der Winkel zwischen der Fassungsebene und der rechten bzw. linken Scheibenebene zu verstehen, wobei der Begriff "Scheibenebene" eine Ebene tangential zur Vorderfläche einer in die Brillenfassung eingearbeiteten Demo- oder Stütz-Scheibe in deren geometrischen Scheibenmittelpunkt beschreibt (eine Demo-Scheibe oder Stütz-Scheibe ist das vom Hersteller zu Demonstrationszwecken in die Brillenfassung eingesetzte Brillenglas ohne dioptrische Wirkung) und der Begriff "Fassungsebene" eine Ebene, durch die beiden vertikalen Mittellinien der rechten und der linken Scheibenebene (für den Fall, dass die beiden Mittellinien nicht parallel zueinander sind, gilt dies näherungsweise) beschreibt. Der Begriff "Hornhaut-Scheitelabstand" bezeichnet den Abstand zwischen der Rückfläche des Brillenglases und dem Apex der Hornhaut gemessen in Blickrichtung senkrecht zur Fassungsebene.

Neben dem Vorneigungswinkel, dem Fassungsscheibenwinkel und dem Hornhaut-Scheitelabstand gehen in die Gebrauchsbedingungen in der Regel auch der Pupillenabstand gemäß (DIN ISO 13666:2013-10, Abschnitt 5.29), also der Abstand zwischen den Mittelpunkten der Pupillen für den Fall, dass die Augen bei Blickrichtung geradeaus ein unendlich entferntes Objekt fixieren, die Zentrierdaten, also die zur Zentrierung des Brillenglases vor dem Auge nötigen Maße und Abstände, und das Objektabstandsmodell, welches festlegt, für welchen Objektabstand ein bestimmter Punkt auf der Brillenglasoberfläche optimiert ist, ein. Das optische Zieldesign ist üblicherweise bezüglich der vorderen Brillenglasfläche definiert, da im Regelfall bei Brillengläsern auch die Fern- und Nah-Konstruktionsbezugspunkte auf der Vorderfläche definiert sind, wobei die Fern-und Nah- Konstruktionsbezugspunkte gemäß DIN ISO 13666:2013-10, Abschnitte 5.13 und 5,14 diejenigen Punkte auf der Vorderfläche eines fertigen Brillenglases oder der fertig bearbeiteten Fläche eines Brillenglases sind, in denen nach Angabe des Herstellers die Konstruktions-Sollwerte für der Fernteil bzw. das Nahteil vorliegen.

Eine zum optischen Zieldesign alternative Möglichkeit ein Zieldesign vorzugeben besteht darin, im Zieldesign Flächeneigenschaften der Freiformfläche anzugeben, bspw. eine Flächenbrechkraft und einen Flächenastigmatismus an den jeweiligen Optimierpunkten, die in diesem Fall auf derjenigen Fläche liegen, welche zur Freiformfläche geformt werden soll. Die Flächenbrechkraft ist dabei ein Maß für die Fähigkeit eines einen Optimierpunkt umgebenden Flächenabschnitts, die Vergenz (Brechzahl des Brillenglasmaterials dividiert durch den Krümmungsradius der Wellenfront) eines in Luft auf den Flächenabschnitt auftreffenden Strahlenbündels zu ändern. Der Flächenastigmatismus an einem Optimierpunkt stellt die Differenz der Flächenbrechkräfte in den Hauptschnitten an einem Optimierpunkt der Fläche dar. Die Hauptschnitte am Optimierpunkt sind dabei die Meridianebenen des den Optimierpunkt umgebenden Flächenabschnitts mit maximaler und minimaler Krümmung, wobei die Meridianebenen Ebenen sind, die den Krümmungsmittelpunkt des den Optimierpunkt umgebenden Flächenabschnitts und den Normalenvektor des Flächenabschnitts am Optimierpunkt enthalten. Im Folgenden sollen von dem Begriff "Zieldesign" sowohl das Flächen-Zieldesign als auch das optische Zieldesign umfasst sein.

Im Rahmen eines Optimierungsverfahrens wird ein Ausgangsbrillenglas, zum Beispiel ein einfaches Einstärken-Brillenglas vorgegeben. Ein Einstärken-Brillenglas ist gemäß DIN ISO 13666:2013-10, Abschnitt 8.3.1 ein Brillenglas, bei von der Konstruktion her dem nur eine dioptrische Wirkung vorhanden ist. Die Geometrie des Ausgangsbrillenglases ergibt sich aus den Refraktionsdaten des Brillenträgers und beinhaltet typischerweise eine sphärische oder torische Rückfläche, die für die Optimierung durch eine approximierende Fläche ersetzt wird, die durch die gebietsweise definierten Funktionen bestimmt ist. Für dieses Ausgangsbrillenglas werden dann mittels Strahlrechnung die sich ergebenden Werte für bspw. den sphärischen Restfehler und den astigmatischen Restfehler an den jeweiligen Optimierpunkten berechnet und mit den durch das optische Zieldesign vorgegebenen Werten verglichen. Die durchgeführte Strahlrechnung berechnet dabei die Werte an den einzelnen Optimierungspunkten jeweils für ein Strahlenbündel, dessen Hauptstrahl durch den Optimierpunkt auf der Brillenglasvorderseite und durch den Augendrehpunkt, also denjenigen Punkt, um den sich das Auge bei Blickbewegungen dreht, verläuft. Aus der Abweichung zwischen bspw. den vorgegebenen Werten für den sphärischen Restfehler und den astigmatischen Restfehler einerseits und den berechneten Werten andererseits lässt sich eine Fehlerfunktion bzw. ein globaler Fehler ermitteln, deren Werte bzw. dessen Wert von der Form der gebietsweise definierten Funktionen bzw. von deren Parametern abhängt. Diese Fehlerfunktion bzw. dieser globale Fehler lässt sich durch ein Optimierungsverfahren minimieren, bei dem die gebietsweise definierten Funktionen, das heißt ihre Parameter, so verändert werden, dass die Fehlerfunktion schließlich eine Abbruchbedingung erfüllt. Die Abbruchbedingung kann bspw. durch das Erreichen eines Minimums oder das Unterschreiten eines vorgegebenen Grenzwertes durch den Wert der Fehlerfunktion realisiert sein. Die optimierten gebietsweise definierten Funktionen stellen schließlich die Freiformfläche dar. Auf der Basis dieser Freiformfläche erfolgt dann die computergesteuerte Bearbeitung der rückseitigen Brillenglasfläche. Zusätzlich oder alternativ zur Rückfläche kann mit dem Optimierungsverfahren auch die Vorderfläche (gemäß DIN ISO 13666:2013-10, Abschnitt 5.8 die Fläche eines Brillenglases, die bestimmungsgemäß in der Brille vom Auge abgewandt liegt) in entsprechender Weise optimiert werden. Statt anhand eines optischen Zieldesigns kann das Optimieren auch anhand eines Flächenzieldesigns erfolgen, wobei das Optimierfahrfahren dann an die Verwendung des Flächenzieldesigns angepasst ist

Das Ziel einer derartigen individuellen Optimierung ist es, für alle Träger von Brillengläsern einer Brillenglasfamilie unabhängig von den Werten der

Refraktionsdaten und unabhängig von den Gebrauchsbedingungen den gleichen Seheindruck zu liefern. Das heißt, Ziel einer individuellen Optimierung ist es, bspw. für alle Gläser einer Brillenglasfamilie das gleiche optische Design zu realisieren. Unter einer Brillenglasfamilie ist dabei eine Menge von Gleitsicht-Brillengläsern mit gleicher Wirkungszunahme, d.h. gleicher Progressionslänge und gleicher Differenz der Wirkung in der Nahsichtzone (Nahteil) zur Wirkung in der Fernsichtzone (Fernteil) zu verstehen. Die Progressionslänge bezeichnet eine Länge, die eine Ausdehnung der Progressionszone oder des Progressionskanals in Richtung des Wirkungsanstiegs definiert. Die Progressionszone ist nach Abschnitt 14.2.14 der DIN EN ISO 13666:2013-10 die Zone des Übergangs zwischen dem Fern- und Nahteil eines Gleitsicht-Brillenglases, oder dem Nah- und Zwischenteil eines degressiven Brillenglases. Der Progressionskanal ist nach 14.1.25 der DIN EN ISO 13666:2013-10 der Bereich eines Gleitsicht-Brillenglases, der scharfes Sehen für Entfernungen ermöglicht, die zwischen der Ferne und der Nähe liegen. Als Progressionslänge kann z.B. der vertikale Abstand im zentralen Sichtbereich von dem Punkt auf der Brillenglasvorderfläche, an dem der Wirkungsanstieg beginnt, bis zu dem Punkt auf der Vorderfläche, an dem die geforderte Wirkungszunahme für das Sehen in der Nähe erstmals erreicht wird verwendet werden. Alternativ ist es z.B. auch möglich, die Länge einer geschwungenen Linie zu verwenden, die in der Mitte der Progressionszone zwischen einem Punkt im Nahteil und einem Punkt im Fernteil, z.B. dem Nahbezugspunkt und dem Fernbezugspunkt, verläuft.

Optimierungsverfahren für Brillengläser sind bspw. in DE 10 2012 000 390 A1 und in WO 2008/089999 A1 beschrieben.

C Brooks: "Lens Design in "Systems for Ophthalmic Dispensing", 1. Januar 2007, Elsevier beschreibt im Abschnitt "atoric lenses" auf Seite 421 des Kapitels 18, dass eine Asphärisierung problematisch ist, wenn die Linse auch Astigmatismus korrigieren soll und daher eine Zylinderkomponente in der Verschreibung vorliegt. Es ist beschrieben, dass eine Asphärisierung auf der Basis einer der Brechkräfte nicht ideal ist. Außerdem wird ausgeführt, dass ein atorisches Linsendesign, in dem die Asphärisierung entlang beider Meridiane erfolgt, vorteilhaft ist.

In Darryl Meister: Personalizes Lenses by Zeiss - Zeiss Individual Progressive Lenses: The Optics of Truly Customized Progressive Lenses" ist das Herstellen von Linsen mit Hilfe von Zieldesigns beschrieben. Auf die Herstellung von Linsen mit einer astigmatischen Wirkung wird nicht explizit eingegangen.

Die JP 2005 201971 A1 beschreibt ein Brillenglas zur Astigmatismuskorrektur sowie eine Verfahren zu dessen Herstellung.

Die Erstellung eines Zieldesigns für ein Brillenglas, welches eine astigmatische Wirkung aufweisen soll, ist schwierig, wenn das Zieldesign eine vorgegebene Richtung berücksichtigen soll. In einem Mehrstärken-Brillenglas wie insbesondere einem Gleitsichtbrillenglas ist die Orientierung des Brillenglases bei seiner Nutzung durch die Anordnung des Nahteils relativ zum Fernteil festgelegt. Diese Festlegung macht das Erstellen eines Zieldesign unter Berücksichtigung einer vorgegebenen Richtung erforderlich. Ebenso können die Gebrauchsbedingungen eines Brillenglases seine Orientierung bei der Nutzung festlegen. Auch die Berücksichtigung von Gebrauchsbedingungen im Zieldesign kann daher das Berücksichtigen einer vorgegebenen Richtung im Zieldesign erforderlich machen. Aufgrund der vorgegebenen Richtung gibt es mannigfaltige Möglichkeiten der Orientierung der Achslage der zylindrischen Wirkung bezogen auf die vorgegebene Richtung, so dass wegen der sehr hohen Zahl an möglichen Orientierungen der Achslage in Bezug auf die vorgegebene Richtung eine sehr hohe Anzahl an Zieldesigns benötigt wird. Die Erstellung einer sehr hohen Anzahl an Zieldesigns, welche unterschiedliche astigmatische Wirkungen repräsentieren, würde daher sehr hohen Aufwand erfordern.

Aus US 6,382,789 B1 ist ein Optimierungsverfahren für Brillengläser bekannt, in dem ein sphärisches Zieldesign zum Optimieren eines Brillenglases mit astigmatischer Wirkung Verwendung findet. Bei der Optimierung wird ein Restastigmatismus, der die Differenz der mit dem zu erzeugenden Brillenglas erzielten astigmatischen Wirkung von der verordnungsgemäßen astigmatischen Wirkung angibt, minimiert.

In einem sphärischen Zieldesign kann die astigmatische Wirkung in Form des sphärischen Äquivalents, das gemäß der Gleichung

$$\text{Sphärisches Äquivalent} = \text{Sphäre} + 0{,}5 \times \text{Zylinder}$$

berechnet wird, Berücksichtigung finden. Dadurch ist ein Zieldesign für ein Brillenglas mit einem Wert für Sphäre von +3 Dioptrien und ohne astigmatische Wirkung identisch mit einem Zieldesign mit einem Wert für Sphäre von +2 Dioptrien und einem Wert für Zylinder von +2 Dioptrien oder einem Zieldesign für ein Brillenglas für einen Wert Sphäre von 0 Dioptrien und einem Wert für Zylinder von +6 Dioptrien.

Zwar ist der mit dem in US 6,382,789 B1 beschriebenen Verfahren nötige Aufwand zum Erstellen von Zieldesigns relativ gering, da die Orientierung der Achslage in Bezug auf eine vorgegeben Richtung im Zieldesign nicht berücksichtigt wird, jedoch werden bei Verwendung sphärischer Zieldesigns zum Optimieren eines Brillenglases mit astigmatischer Wirkung die in den zu erzeugenden Brillengläsern je nach Größe der Werte für Zylinder in den beiden Hauptschnitten unterschiedlichen erreichbaren Asphärisierungen nicht berücksichtigt, was zur Folge hat, dass im Rahmen des Optimierungsalgorithmus etwa in einem Hauptschnitt nicht erreichbare Forderungen gestellt werden und in einem anderen Hauptschnitt unnötige Freiheiten gelassen werden. In jedem Fall finden sich die Werte für Zylinder und Achse nicht im Zieldesign wieder, was die vollständige Entfaltung der Möglichkeiten des Optimierungsalgorithmus behindert.

Gegenüber der US 6,382,789 B1 ist es daher Aufgabe der vorliegenden Erfindung, ein Verfahren zum Erzeugen eines Zieldesigns zur Verfügung zu stellen, welches eine vollständigere Entfaltung der Möglichkeiten des Optimierungsalgorithmus zulässt. Daneben ist es Aufgabe der vorliegenden Erfindung, ein Datenverarbeitungssystem zum Erzeugen eines Zieldesigns zur Verfügung zu stellen, welches eine vollständigere Entfaltung der Möglichkeiten des Optimierungsalgorithmus zulässt. Weitere Aufgaben der vorliegenden Erfindung sind es, ein Computerprogramm sowie ein Speichermedium zur Verfügung zu stellen, die die Durchführung des erfindungsgemäßen Verfahrens ermöglichen. Daneben ist es Aufgabe der Erfindung, ein vorteilhaftes Verfahren zum Bereitstellen eines Brillenglases, und ein vorteilhaftes Verfahren zum Herstellen eines Brillenglases zur Verfügung zu stellen.

Diese Aufgaben werden durch ein computerimplementiertes Verfahren nach Anspruch 1, ein Computerprogramm nach Anspruch 10, ein Datenverarbeitungssystem nach Anspruch 11, ein nichtflüchtiges computerlesbares Speichermedium nach Anspruch 12 und ein Verfahren zum Bereitstellen eines Brillenglases nach Anspruch 13, 1 und ein Verfahren nach Anspruch 15 gelöst. Die abhängigen Ansprüche enthalten vorteilhafte Weiterbildungen der Erfindung.

Erfindungsgemäß wird ein computerimplementiertes Verfahren zum Erzeugen eines eine verordnungsgemäße astigmatische Wirkung berücksichtigenden Zieldesigns, welches zur Verwendung beim Optimieren eines die astigmatische Wirkung aufweisenden Brillenglases geeignet ist, zur Verfügung gestellt. Das Verfahren umfasst einen Schritt des Bereitstellens eines Ausgangszieldesigns, welches auf einem bestimmten sphärischen Ausgangswert basiert und die astigmatische Wirkung nicht berücksichtigt oder dadurch mittelbar berücksichtigt, dass als sphärischer Ausgangswert das sphärische Äquivalent Verwendung findet. Das Ausgangszieldesign kann bspw. ein für das Erzielen einer bestimmten sphärische Wirkung oder, falls ein Zieldesign für ein Mehrstärken-Brillenglas erzeugt werden soll, mehrerer bestimmter sphärischer Wirkungen im zu erzeugenden Brillenglas angepasst sein.

Das erfindungsgemäße Verfahren zeichnet sich dadurch aus, dass das Erzeugen des Zieldesigns durch eine Korrektur des Ausgangszieldesigns anhand eines die astigmatische Wirkung des Brillenglases unmittelbar berücksichtigenden Korrekturzieldesigns erfolgt. Das Korrekturzieldesign wird anhand eines ersten Zieldesigns, das auf dem Wert für Zylinder aus der Verordnung für den Nutzer basiert, und eines zweiten Zieldesigns, das auf dem bestimmten sphärischen Ausgangswert basiert, gebildet, indem das zweite Zieldesign vom ersten Zieldesign subtrahiert wird. Die Korrektur des Ausgangszieldesigns anhand des Korrekturzieldesigns erfolgt durch Addieren des Ausgangszieldesigns und des Korrekturzieldesigns. Ein Zieldesign soll hierbei als die astigmatische Wirkung unmittelbar berücksichtigend angesehen werden, wenn es die in dem zu erzeugenden Brillenglas je nach Größe der Werte für Zylinder in den beiden Hauptschnitten unterschiedlichen erreichbaren Asphärisierungen berücksichtigt. Entsprechend soll ein Zieldesign als die astigmatische Wirkung nicht unmittelbar berücksichtigend angesehen werden, wenn es die in dem zu erzeugenden Brillenglas je nach Größe der Werte für Zylinder in den beiden Hauptschnitten unterschiedlichen erreichbaren Asphärisierungen nicht berücksichtigt. Beispielsweise berücksichtigt ein sphärisches Zieldesign, welches auf dem sphärischen Äquivalent der Werte für Sphäre und Zylinder aus der Verordnung für den Nutzer basiert, nicht die in dem zu erzeugenden Brillenglas je nach Größe der Werte für Zylinder in den beiden Hauptschnitten unterschiedlichen erreichbaren Asphärisierungen, so dass es die astigmatische Wirkung nicht unmittelbar berücksichtigt. Es sei angemerkt, dass ein sphärisches Zieldesign, in welches weder der Wert für Zylinder noch der Wert für Achse aus der Verordnung für den Nutzer eingeht und das somit die astigmatische Wirkung überhaupt nicht berücksichtigt, auch ein Zieldesign ist, welches die astigmatische Wirkung nicht unmittelbar berücksichtigt. Der Begriff "nicht unmittelbar berücksichtigt" umfasst im Rahmen der vorliegenden Erfindung daher auch den Fall "überhaupt nicht berücksichtigt"

Das erfindungsgemäße Verfahren sieht somit vor, die astigmatische Wirkung eines Brillenglases, wie sie sich aus der Verordnung ergibt, nicht direkt im Zieldesign zu berücksichtigen, sondern indirekt in Form einer die astigmatische Wirkung unmittelbar berücksichtigenden Korrektur für ein Ausgangszieldesign, welches die astigmatische Wirkung nicht unmittelbar berücksichtigt. Dieses Vorgehen ist insofern vorteilhaft, als dass das Ausgangszieldesign die astigmatische Wirkung nicht unmittelbar zu berücksichtigen braucht (aber bspw. in Form des sphärischen Äquivalents optional mittelbar berücksichtigen kann). Das Ausgangszieldesign kann stattdessen andere Parameter berücksichtigen, deren Berücksichtigung zusammen mit der unmittelbaren Berücksichtigung der astigmatischen Wirkung einen hohen Aufwand erfordern würde. Diese Parameter brauchen im Korrekturzieldesign dann keine Berücksichtigung zu finden. Wenn zu erzeugende Zieldesign bspw. ein Zieldesign zur Verwendung beim Optimieren eines eine bestimmte Orientierung bei seiner Nutzung aufweisenden Brillenglases ist, kann das Ausgangszieldesign eine vorgegebene Richtung repräsentierende Daten berücksichtigen, wobei die vorgegebene Richtung durch die Orientierung des Brillenglases bei seiner Nutzung bedingt ist. Das Korrekturzieldesign wird dann ohne Berücksichtigung der vorgegebenen Richtung erstellt. Die Orientierung des Brillenglases und die dadurch bedingte vorgegebene Richtung im Zieldesign folgen bei einem Mehrstärken-Brillenglas wie insbesondere einem Gleitsichtbrillenglas bspw. aus der Anordnung des Nahteils relativ zum Fernteil. Auch die Berücksichtigung Gebrauchsbedingungen des Brillenglases bedingen eine vorgegebene Richtung im Zieldesign. Im Falle eines Einstärken-Brillenglases kann eine vorgegebene Richtung im Zieldesign daher durch die Berücksichtigung von Gebrauchsbedingungen erforderlich sein. Im Rahmen des Erstellens des Zieldesigns für Mehrstärken-Brillengläser oder Einstärken-Brillengläser kommen dabei typischerweise allgemeine Gebrauchsbedingungen zum Einsatz, d.h. Gebrauchsbedingungen, die an eine definierte Gruppe von Trägern angepasst sind. Die Optimierung eines Brillenglases mit Hilfe des erstellten Zieldesigns erfolgt dann typischerweise unter Berücksichtigung der individuellen Gebrauchsbedingungen des Nutzers.

Mit dem erfindungsmäßen Verfahren, in dem die astigmatische Wirkung lediglich im Korrekturzieldesign unmittelbar berücksichtigt wird, wird das Bereitstellen bzw. das Ermitteln eines geeigneten Ausgangszieldesigns und das Bereitstellen bzw. das Ermitteln eines geeigneten Korrekturzieldesigns mit wenig Aufwand möglich, insbesondere dann, wenn bspw. eine bestimmte Orientierung des Brillenglases eine vorgegebene Richtung im Zieldesign bedingt. Die Korrektur selbst kann dann ebenfalls mit wenig Aufwand durchgeführt werden. Das so erzeugte Zieldesign ermöglicht es, zu vermeiden, dass im Rahmen des Optimierungsalgorithmus zum Optimieren eines Brillenglases mit astigmatischer Wirkung in einem Hauptschnitt nicht erreichbare Forderungen gestellt werden und in einem anderen Hauptschnitt unnötige Freiheiten gelassen werden, was dazu führen würde, dass der Optimierungsalgorithmus in der vollständigen Entfaltung seiner Möglichkeiten behindert wird. Mit einem gemäß dem erfindungsgemäßen Verfahren erzeugten Zieldesign ist dagegen die vollständige Entfaltung der Möglichkeiten des Optimierungsalgorithmus erreichbar. Gleichzeitig bleit der Aufwand für das Erstellen des Zieldesigns überschaubar.

Das die astigmatische Wirkung unmittelbar berücksichtigende Korrekturzieldesign kann insbesondere ein Zieldesign für ein Einstärken-Brillenglas sein. Ein Zieldesign für ein Einstärken-Brillenglas soll hierbei ein Zieldesign zu verstehen sein, dass für das Optimieren eines Einstärken-Brillenglases herangezogen werden kann. Ein Zieldesign für ein Einstärken-Brillenglas ist erheblich einfacher zu erstellen, als ein Zieldesign für ein Mehrstärken-Brillenglas. Zur Korrektur des Ausgangszieldesigns ist ein Zieldesign für ein Einstärken-Brillenglas dennoch geeignet, selbst wenn das Ausgangszieldesign ein Mehrstärken-Brillenglas sein sollte. Das Zieldesign für ein Einstärken-Brillenglas ist dabei insbesondere ein Zieldesign für ein atorisches Einstärken-Brillenglas. Dies ermöglicht eine bessere Korrektion von Aberrationen.

Das Korrekturzieldesign basiert insbesondere auf dem Wert für Zylinder aus der Verordnung für den Nutzer oder auf dem Wert für Zylinder und dem Wert für Sphäre aus der Verordnung für den Nutzer. Dadurch kann der beim Erstellen des Korrekturzieldesigns benötigte Wert ohne Umrechnungen direkt der Verordnung entnommen werden. Beim Korrigieren des Ausgangszieldesigns anhand des Korrekturzieldesigns kann dann der Wert für Achse der Verordnung für den Nutzer verwendet werden, um die Orientierung des Korrekturzieldesigns in Bezug auf das Ausgangszieldesign festzulegen. Dadurch ist nicht für jede Kombination für Zylinder und Achse ein eigenes Korrekturzieldesign nötig, sondern nur für jeden Wert für Zylinder, wodurch sich die Anzahl an Korrekturzieldesigns erheblich reduziert.

In einer Ausgestaltung des erfindungsgemäßen Verfahrens basiert das bereitgestellte Ausgangszieldesign auch auf einem bestimmten sphärischen Ausgangswert. Dieser bestimmte sphärische Ausgangswert kann ein beliebiger Wert für Sphäre sein, was den Aufwand für das Bereitstellen des Ausgangszieldesigns besonders gering hält. Er kann aber auch durch das sphärische Äquivalent der Werte für Zylinder und Achse aus der Verordnung für den Nutzer gegeben sein. Ein solches Ausgangszieldesign weist dann bereits eine gewisse Anpassung an die astigmatische Wirkung des zu erzeugenden Brillenglases auf, so dass die Korrektur geringer ausfällt, als wenn irgendein beliebiger sphärischer Ausgangswert im Ausgangszieldesign Verwendung findet. Das Korrekturdesign wird dann anhand eines auf dem Wert für Zylinder aus der Verordnung für den Nutzer basierenden Zieldesigns und eines auf dem sphärischen Ausgangswert basierenden Zieldesigns gebildet. Das Korrekturzieldesign kann damit aus zwei einfach zu bildenden Zieldesigns generiert werden. Insbesondere kann das Korrekturzieldesign aus der Differenz zwischen dem auf dem Wert für Zylinder aus der Verordnung für den Nutzer basierenden Zieldesign und dem auf dem sphärischen Ausgangswert basierenden Zieldesign gebildet werden. Das Subtrahieren zweier Zieldesigns ist eine wenig rechenintensive Vorgehensweise. Dabei sind das auf dem sphärischen Ausgangswert basierende Zieldesign und das auf dem Wert für Zylinder aus der Verordnung für den Nutzer basierende Zieldesign insbesondere jeweils Zieldesigns für asphärische bzw. atorische Einstärken-Brillengläser, d.h. jeweils ein Zieldesign, das für das Optimieren eines asphärischen bzw. atorischen Einstärken-Brillenglases gedacht sind. Derartige Zieldesigns weisen eine einfache Struktur auf und sind daher mit besonders wenig Aufwand zu bilden und zu subtrahieren.

Das auf dem Wert für Zylinder aus der Verordnung für den Nutzer basierende Zieldesign für ein Einstärken-Brillenglas kann insbesondere anhand einer Anzahl von Zieldesigns für Einstärken-Brillengläser, die jeweils durch eine Kombination eines Wertes für Sphäre und eines Wertes für Zylinder charakterisiert sind, ermittelt werden. Diese Ausgestaltung ermöglicht es, eine Anzahl auf unterschiedlichen Werten für Zylinder und Sphäre basierende Zieldesigns vorab zu berechnen und bspw. in Form einer Matrix zu gruppieren. In einer ersten konkreten Ausgestaltung, die besonders wenig Aufwand für das Ermitteln des auf dem Wert für Zylinder aus der Verordnung für den Nutzer basierenden Zieldesigns mit sich bringt, erfolgt das Ermitteln dieses Zieldesigns durch Auswählen eines Zieldesigns aus der Anzahl von Zieldesigns für Einstärken-Brillengläser, also beispielsweise durch Auswahl eines Zieldesigns aus der zuvor genannten Matrix. Diese Vorgehensweise zum Ermitteln des auf dem Wert für Zylinder aus der Verordnung für den Nutzer basierenden Zieldesigns funktioniert umso besser, je dichter die Anzahl der Zieldesigns für Einstärken-Brillengläser in der Matrix angeordnet sind, d.h. je geringer die Differenzen zwischen den Werten für Sphäre und Zylinder von in der Matrix benachbarten Einstärken-Brillengläsern sind.

Das Ermitteln des auf dem Wert für Zylinder aus der Verordnung für den Nutzer basierenden Zieldesigns für ein Einstärken-Brillenglas kann aber auch durch Interpolieren zwischen zwei Zieldesigns aus der Anzahl von Zieldesigns für Einstärken-Brillengläser erfolgen, also beispielsweise durch Interpolation der Werte für Zylinder und Sphäre zwischen wenigstens zwei Zieldesigns, bspw. zwischen in der Matrix benachbarten Zieldesigns. Diese Vorgehensweise ermöglicht auch dann gute Resultate, wenn die Matrix mit den Einstärken-Brillengläsern wenig dicht ist, d.h. die Differenzen der Werte für Sphäre und Zylinder zwischen in der Matrix benachbarten Zieldesigns für Einstärken-Brillengläser relativ groß sind. Aber selbst bei einer relativ dichten Matrix kann die Verwendung einer Interpolation zu einem noch besser an die verordnungsgemäßen Werte angepassten Zieldesign und somit zu einem noch besser an die Verordnung angepassten Korrekturzieldesign führen.

Ein erfindungsgemäßes Computerprogramm zum Erzeugen eines eine astigmatische Wirkung berücksichtigenden Zieldesigns, welches zur Verwendung beim Optimieren eines die astigmatische Wirkung aufweisenden Brillenglases geeignet ist, umfasst Instruktionen, die, wenn sie auf einem Computer ausgeführt werden, den Computer dazu veranlassen, ein Ausgangszieldesign bereitzustellen, das auf einem bestimmten sphärischen Ausgangswert basiert und das die verordnungsgemäße astigmatische Wirkung des Brillenglases nicht berücksichtigt oder dadurch mittelbar berücksichtigt, dass als sphärischer Ausgangswert das sphärische Äquivalent Verwendung findet. Außerdem umfasst das erfindungsgemäße Computerprogramm Instruktionen die, wenn sie auf einem Computer ausgeführt werden, den Computer dazu veranlassen, das Zieldesign durch eine Korrektur des Ausgangszieldesigns anhand eines die astigmatische Wirkung des Brillenglases unmittelbar berücksichtigenden Korrekturzieldesigns, das auf dem Wert für Zylinder und dem Wert für Sphäre aus der Verordnung für den Nutzer basiert, zu erzeugen. Das Korrekturzieldesign wird anhand eines ersten Zieldesigns, das auf dem Wert für Zylinder aus der Verordnung für den Nutzer basiert, und eines zweiten Zieldesigns, das auf dem bestimmten sphärischen Ausgangswert basiert, gebildet, indem das zweite Zieldesign vom ersten Zieldesign subtrahiert wird. Die Korrektur des Ausgangszieldesigns erfolgt anhand des Korrekturzieldesigns durch Addieren des Ausgangszieldesigns und des Korrekturzieldesigns. Das erfindungsgemäße Computerprogramm enthält somit Instruktionen, die, wenn sie auf einem Computer ausgeführt werden, die Durchführung des erfindungsgemäßen Verfahrens veranlassen. Die mit Bezug auf das erfindungsgemäße Verfahren beschriebenen Weiterbildungen und die damit verbundenen Vorteile lassen sich auch mit dem erfindungsgemäßen Computerprogramm durch entsprechende Instruktionen des Computerprogramms realisieren.

Ein erfindungsgemäßes Datenverarbeitungssystem zum Erzeugen eines eine astigmatische Wirkung berücksichtigenden Zieldesigns, welches zur Verwendung beim Optimieren eines die astigmatische Wirkung aufweisenden Brillenglases geeignet ist, umfasst einen Prozessor und einen Speicher. Der Prozessor ist dazu ausgestaltet, basierend auf Instruktionen eines im Speicher gespeicherten Computerprogrammes ein Ausgangszieldesign bereitzustellen, das auf einem bestimmten sphärischen Ausgangswert basiert und die astigmatische Wirkung nicht berücksichtigt oder dadurch mittelbar berücksichtigt, dass als sphärischer Ausgangswert das sphärische Äquivalent Verwendung findet. Außerdem ist der Prozessor dazu ausgestaltet, basierend auf den Instruktionen des im Speicher gespeicherten Computerprogramms das Zieldesign durch eine Korrektur des Ausgangszieldesigns anhand eines die astigmatische Wirkung des Brillenglases unmittelbar berücksichtigenden Korrekturzieldesigns, das auf dem Wert für Zylinder und dem Wert für Sphäre aus der Verordnung für den Nutzer basiert, zu erzeugen. Das Korrekturzieldesign wird anhand eines ersten Zieldesigns, das auf dem Wert für Zylinder aus der Verordnung für den Nutzer basiert, und eines zweiten Zieldesigns, das auf dem bestimmten sphärischen Ausgangswert basiert, gebildet, indem das zweite Zieldesign vom ersten Zieldesign subtrahiert wird. Die Korrektur des Ausgangszieldesigns erfolgt anhand des Korrekturzieldesigns durch Addieren des Ausgangszieldesigns und des Korrekturzieldesigns

Mit dem erfindungsgemäßen Datenverarbeitungssystem kann das erfindungsgemäße computerimplementierte Verfahren ausgeführt werden. Weiterbildungen des erfindungsgemäßen Datenverarbeitungssystems ergeben sich aus dem erfindungsgemäßen Verfahren, welches dann in Form eines Computerprogrammes mit entsprechenden Instruktionen im Speicher des Datenverarbeitungssystems abgelegt ist. Die mit Bezug auf die Weiterbildungen des erfindungsgemäßen Verfahrens beschriebenen Vorteile sind daher auf entsprechende Weiterbildungen des erfindungsgemäßen Datenverarbeitungssystems übertragbar.

Ein erfindungsgemäßes nicht flüchtiges computerlesbares Speichermedium beinhaltet Instruktionen zum Erzeugen eines eine astigmatische Wirkung berücksichtigenden Zieldesigns, welches zur Verwendung beim Optimieren eines die astigmatische Wirkung aufweisenden Brillenglases geeignet ist. Die im Speichermedium enthaltenen Instruktionen veranlassen einen Computer, wenn sie auf diesem ausgeführt werden, dazu, ein Ausgangszieldesign bereitzustellen, welches auf einem bestimmten sphärischen Ausgangswert basiert und die verordnungsgemäße astigmatische Wirkung nicht berücksichtigt oder dadurch mittelbar berücksichtigt, dass als sphärischer Ausgangswert das sphärische Äquivalent Verwendung findet. Außerdem umfasst das Speichermedium darauf gespeicherte Instruktionen, die, wenn sie auf einen Computer aufgeführt werden, den Computer dazu veranlassen, das Zieldesign durch eine Korrektur des Ausgangszieldesigns anhand eines die astigmatische Wirkung des Brillenglases unmittelbar berücksichtigenden Korrekturzieldesigns, das auf dem Wert für Zylinder und dem Wert für Sphäre aus der Verordnung für den Nutzer basiert, zu erzeugen. Das Korrekturzieldesign wird anhand eines ersten Zieldesigns, das auf dem Wert für Zylinder aus der Verordnung für den Nutzer basiert, und eines zweiten Zieldesigns, das auf dem bestimmten sphärischen Ausgangswert basiert, gebildet, indem das zweite Zieldesign vom ersten Zieldesign subtrahiert wird. Die Korrektur des Ausgangszieldesigns erfolgt anhand des Korrekturzieldesigns durch Addieren des Ausgangszieldesigns und des Korrekturzieldesigns.

Das erfindungsgemäße computerlesbare Speichermedium ermöglicht das Bereitstellen von Instruktionen, die ein Ausführen des erfindungsgemäßen computerimplementierten Verfahrens ermöglichen, für ein Datenverarbeitungssystem. Weiterbildungen des erfindungsgemäßen computerlesbaren Speichermediums umfassen Instruktionen, die Weiterbildungen des erfindungsgemäßen Verfahrens repräsentieren. Vorteile der Weiterbildungen des erfindungsgemäßen computerlesbaren Speichermediums lassen sich daher ohne weiteres aus den mit Bezug auf das erfindungsgemäße computerimplementierte Verfahren beschriebenen Vorteilen ableiten.

Im erfindungsgemäßen Verfahren zum Bereitstellen eines Brillenglases werden ein Ausgangsbrillenglas und ein Zieldesign, welches wenigstens eine vom Brillenglas zu erreichende Eigenschaft angibt, vorgegeben. Anhand eines Optimieralgorithmus wird wenigstens eine Fläche des Ausgangsbrillenglases derart optimiert, dass das Ausgangsbrillenglas mit der optimierten Fläche die durch das Zieldesign angegebenen wenigstens eine zu erreichenden Eigenschaft bis auf eine zulässige Abweichung erreicht. Das die optimierte Fläche aufweisende Ausgangsbrillenglas wird schließlich als das Brillenglas bereitgestellt.

Das erfindungsgemäßen Verfahren zum Bereitstellen eines Brillenglases zeichnet sich dadurch aus, dass als das Zieldesign ein Zieldesign Verwendung findet, das nach dem erfindungsgemäßen Verfahren zum Erzeugen eines eine astigmatische Wirkung berücksichtigenden Zieldesigns erzeugtes Zieldesign erzeugt wird. Die damit verbundenen Vorteile ergeben sich unmittelbar aus den mit Bezug auf das computerimplementierte Verfahren zum Erzeugen eine eine astigmatische Wirkung berücksichtigenden Zieldesigns beschriebenen Vorteilen.

Eine Eigenschaft kann bspw. ein astigmatischer oder ein sphärischer Restfehler sein. Es ist aber auch möglich, dass die Eigenschaft ein Flächenastigmatismus oder eine Flächenbrechkraft ist.

Die wenigstens eine Fläche, welche optimiert wird, kann die Rückfläche oder die Vorderfläche des Brillenglases sein. Es besteht aber auch die Möglichkeit sowohl die Rückfläche als auch die Vorderfläche des Brillenglases zu optimieren.

Die wenigstens eine zu optimierende Fläche des Ausgangsbrillenglases kann eine Freiformfläche sein. Als solche kann sie bspw. durch die eingangs beschriebenen gebietsweise definierten Funktionen repräsentiert werden.

Die Abweichung kann etwa durch den Funktionswert einer Fehlerfunktion gegeben sein, wobei der Funktionswert der Fehlerfunktion von der Differenz der erreichten Eigenschaft von der zu erreichenden Eigenschaft abhängt, oder im Falle mehrerer Eigenschaften von den Differenzen der erreichten Eigenschaften von den jeweiligen zu erreichenden Eigenschaften. Eine Abweichung kann bspw. dann als zulässig angesehen werden, wenn der Funktionswert der Fehlerfunktion einen vorgegebenen Grenzwert nicht überschreitet oder wenn der Funktionswert der Fehlerfunktion ein Minimum aufweist.

Das Bereitstellen des Brillenglases kann insbesondere durch Bereitstellen einer numerischen Darstellung des Brillenglases erfolgen, wobei die numerische Darstellung des Brillenglases dann durch eine numerische Darstellung des die optimierte Fläche aufweisenden Ausgangsbrillenglases gegeben ist. Erfindungsgemäß wird außerdem ein Speichermedium mit einer derartigen numerischen Darstellung eines Brillenglases zur Verfügung gestellt.

Weiterhin wird erfindungsgemäß ein Verfahren zum Herstellen eines Brillenglases zur Verfügung gestellt. In diesem Verfahren wird ein Ausgangskörper bereitgestellt, aus dem das Brillenglas basierend auf einer bereitgestellten numerischen Darstellung des Brillenglases mittels materialabtragender Bearbeitung, insbesondere mittels spanender Bearbeitung, hergestellt wird. Die Herstellung kann insbesondere computergesteuert erfolgen. Die numerische Darstellung des Brillenglases wird entweder aus einem erfindungsgemäßen, eine numerische Darstellung eines Brillenglases enthaltenden Speichermedium ausgelesen oder mittels des erfindungsgemäßen Verfahrens zum Bereitstellen eines Brillenglases bereitgestellt. Die mit dem erfindungsgemäßen Verfahren zum Herstellen eines Brillenglases verbundenen Vorteile ergeben sich aus den Vorteilen des erfindungsgemäßen Verfahrens zum Bereitstellen eines Brillenglases und damit wie oben ausgeführt aus den mit Bezug auf das computerimplementierte Verfahren zum Erzeugen eine eine astigmatische Wirkung berücksichtigenden Zieldesigns beschriebenen Vorteilen.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.

Figur 1     zeigt ein Ablaufdiagramm, das ein Ausführungsbeispiel für das computerimplementierte Verfahren zum Erzeugen eines Zieldesigns repräsentiert.

Figur 2     zeigt ein Ablaufdiagramm für ein mögliches Verfahren zum Ermitteln eines Korrekturzieldesigns.

Figur 3     zeigt in einem Blockschaltbild schematisch die Komponenten eines zum Durchführen des Verfahrens zum Erzeugen eines Zieldesigns geeigneten Datenverarbeitungssystems.

Im Rahmen der Beschreibung der Erfindung finden folgende Definitionen Verwendung:

Zieldesign

Ein Zieldesign im Sinne der Vorliegenden Erfindung ist die Vorgabe einer Verteilung von Bildfehlern über das Brillenglas oder von Flächeneigenschaften des Brillenglases, die in einem Optimierprozess erreicht werden sollen. Im ersten Fall spricht man vom optischen Zieldesign, im zweiten Fall vom Flächenzieldesign. Ein optisches Zieldesign ist demnach die Vorgabe einer Verteilung von Bildfehlern über das gesamte Brillenglas oder aber auch darüber hinaus im Brillenträgerstrahlengang (z.B. astigmatische Restabweichung, sphärische Restabweichung, Prisma, Horizontalsymmetrie, Verzeichnung, aber auch Fehler höherer Ordnung wie z.B. Koma). Zusätzlich kann das optische Zieldesign noch Vorgaben für die astigmatischen und sphärischen Restabweichungen an Bezugspunkten (z.B. Fern-Konstruktionsbezugspunkt oder Nah-Konstruktionsbezugspunkt) oder die Addition im Messstrahlengang eines Messgerätes, beispielsweise im Strahlengang eines Scheitelbrechwertmessgeräts, enthalten. In einem Flächenzieldesign sind dagegen im Optimierprozess zu erreichende Flächeneigenschaften der zu formenden Freiformfläche angegeben, bspw. eine Flächenbrechkraft und einen Flächenastigmatismus. Die Flächenbrechkraft ist dabei ein Maß für die Fähigkeit eines einen Optimierpunkt umgebenden Flächenabschnitts, die Vergenz (Brechzahl des Brillenglasmaterials dividiert durch den Krümmungsradius der Wellenfront) eines in Luft auf den Flächenabschnitt auftreffenden Strahlenbündels zu ändern. Der Flächenastigmatismus an einem Optimierpunkt stellt die Differenz der Flächenbrechkräfte in den Hauptschnitten an einem Optimierpunkt der Fläche dar. Sofern der nachfolgende Text nicht spezifisch auf ein optisches Zieldesign oder ein Flächenzieldesign Bezug genommen ist, sondern nur auf ein Zieldesign, soll der Begriff "Zieldesign" immer beide Arten von Zieldesigns umfassen.

Ausgangszieldesign

Unter dem Begriff "Ausgangzieldesign" soll im Rahmen der Erfindung ein Zieldesign zu verstehen sein, welches zur Verwendung beim Optimieren eines Brillenglases geeignet ist und einen Ausgangspunkt bildet, auf der Basis dessen schließlich das zu erzeugende Zieldesign mittels einer Korrektur erzeugt wird.

vorgegebene Richtung

Bei einem Mehrstärken-Brillenglas wie bspw. einem Gleitsicht-Brillenglas ist die Orientierung bei seiner Nutzung durch die Anordnung des Nahteils relativ zum Fernteil festgelegt. Auch die Gebrauchsbedingungen eines Brillenglases können eine bestimmte Orientierung des Brillenglases bei seiner Nutzung festlegen, so dass im Falle der Berücksichtigung von Gebrauchsbedingen auch bei ein einem Einstärken-Brillenglas eine Orientierung des Brillenglases bei seiner Nutzung festgelegt ist. Die Orientierung des Brillenglases geht in ein Zieldesigns für das Optimieren eines solchen Brillenglases in Form einer eine Orientierung des Brillenglases berücksichtigenden vorgegebenen Richtung ein.

Korrekturzieldesign

Unter dem Begriff "Korrekturzieldesign" soll im Rahmen der Erfindung ein Zieldesign zu verstehen sein, welches zur Verwendung beim Optimieren eines Brillenglases geeignet ist und zur Korrektur des Ausgangszieldesigns verwendet wird.

Verordnung

Der Begriff "Verordnung" bezeichnet eine Zusammenstellung, in der die für die Korrektion einer diagnostizierten Fehlsichtigkeit notwendigen dioptrischen Wirkungen in Form geeigneter Werte angegeben sind. Im Falle einer sphärischen Wirkung kann die Verordnung einen Wert "Sph" für Sphäre enthalten. Im Falle einer astigmatischen Wirkung kann die Verordnung Werte "Cyl" für Zylinder und "Ach" für Achse und im Falle einer prismatischen Wirkung einen Wert für Prisma enthalten. Die Verordnung kann darüber hinaus weitere Werte enthalten, im Falle von Mehrstärken-Brillengläsern bspw. den Wert "Add", welcher die Differenz zwischen dem Scheitelbrechwert im Nahteil des Brillenglases und im Fernteil des Brillenglases angibt. Auch ein Wert "PD" für den Pupillenabstand kann in der Verordnung enthalten sein.

sphärischer Ausgangswert

Unter dem Begriff "sphärischer Ausgangswert" soll im Rahmen der vorliegenden Erfindung ein Wert für "Sphäre" zu verstehen sein, der beliebig gewählt sein kann und insbesondere nicht dem Wert für "Sphäre" aus der Verordnung für den Nutzer eines Brillenglases übereinzustimmen braucht. In Ausführungsbeispiel der vorliegenden Erfindung ist der sphärische Ausgangswert ein Wert, der dem sphärischen Äquivalent der Werte für Sphäre und Zylinder aus der Verordnung für den Nutzer entspricht. Dies ist jedoch nicht obligatorisch.

sphärisches Äquivalent

Der Begriff "sphärisches Äquivalent" bezeichnet eine mittlere sphärische Wirkung eines Brillenglases mit einer sphärischen Wirkung und einer astigmatischen Wirkung, wobei die mittlere sphärische Wirkung sowohl auf der sphärischen Wirkung als auch auf der astigmatischen Wirkung des Brillenglases beruht. Das sphärische Äquivalent wird gemäß der folgenden Gleichung berechnet: Sphärisches Äquivalent = Sphäre + 0,5 x Zylinder.

Gebrauchsbedingungen

Der Begriff "Gebrauchsbedingungen" bezeichnet die Position und die Orientierung der Brille in Bezug auf die Augen und das Gesicht des Trägers während des Tragens der Brille. Die Gebrauchsbedingungen lassen sich bspw. durch den Vorneigungswinkel (DIN ISO 13666:2013-10, Abschnitt 5.18), auch pantoskopischer Winkel genannt, den Fassungsscheibenwinkel (DIN ISO 13666:2013-10, Abschnitt 17.3) und den Hornhaut-Scheitelabstand (DIN ISO 13666:2013-10, Abschnitt 5.27) angeben und sind für jedes Brillenglas an den jeweiligen Träger angepasst. Typische Werte für den Vorneigungswinkel liegen zwischen -20 Grad und +30 Grad, typische Werte für den Hornhaut-Scheitelabstand liegen im Bereich zwischen 20 mm und 30 mm und typische Werte für den Fassungsscheibenwinkel liegen im Bereich von -5 Grad bis +15 Grad. Neben dem Vorneigungswinkel, dem Fassungsscheibenwinkel und dem Hornhaut-Scheitelabstand gehen in die Gebrauchsbedingungen in der Regel auch der Pupillenabstand gemäß (DIN ISO 13666:2013-10, Abschnitt 5.29), also der Abstand zwischen den Mittelpunkten der Pupillen für den Fall, dass die Augen bei Blickrichtung geradeaus ein unendlich entferntes Objekt fixieren, die Zentrierdaten, also die zur Zentrierung des Brillenglases vor dem Auge nötigen Maße und Abstände, und das Objektabstandsmodell, welches festlegt, für welchen Objektabstand ein bestimmter Punkt auf der Brillenglasoberfläche optimiert ist, ein. Die Gebrauchsbedingungen können individuelle Gebrauchsbedingungen sein, d.h. sie sind an einen spezifischen Träger angepasst, oder allgemeine Gebrauchsbedingungen, d.h. sie sind an eine definierte Gruppe von Trägern angepasst.

Hauptschnitt

Ein Hauptschnitt ist gemäß DIN ISO 13666:2013-10, Abschnitt 7.4 diejenige Meridianebene einer Fläche mit maximaler oder minimaler gemessener Krümmung dieser Fläche, wobei der Begriff "Meridianebene" gemäß DIN ISO 13666:2013-10, Abschnitt 5.7.1 eine Ebene bezeichnet, die den oder die Krümmungsmittelpunkt(e) einer Fläche beinhaltet.

Interpolieren

Unter dem Begriff "Interpolieren" soll im Rahmen der vorliegenden Erfindung jede Art des Ermittelns von Zwischenwerten zwischen diskreten Werten eines Datensatzes zu verstehen sein. Beispielsweise kann ein Interpolieren dadurch erfolgen, dass eine stetige oder nicht-stetige Funktion an die diskreten Werte des Datensatzes derart angepasst wird, dass die diskreten Werte des Datensatzes jeweils durch Funktionswerte dargestellt sind, und als Zwischenwerte dann zwischen den die diskreten Werten des Datensatzes darstellenden Funktionswerten liegende Funktionswerte Verwendung finden.

Bereitstellen

Unter dem Begriff "Bereitstellen" soll im Rahmen der vorliegenden Erfindung jede Art des Verfügbarmachens von Daten zu verstehen sein, insbesondere soll der Begriff "Bereitstellen" das Verfügbarmachen durch Einlesen aus einem Speicher oder einem Netzwerk, das Verfügbarmachen durch den Empfang von Daten, das Eingeben in einen Computer, etc. umfassen.

asphärisches Brillenglas

Unter dem Begriff "asphärisches Brillenglas" ist ein Brillenglas mit einer asphärischen Fläche zu verstehen, wobei eine asphärische Fläche ein Teil einer Rotationsfläche ist, deren Krümmung sich vom Scheitelpunkt zur Peripherie hin ändert (DIN ISO 13666:2013-10, Abschnitt 7.3). Eine sphärische Fläche ist dagegen Teil einer Innen- oder Außenfläche einer Kugel (DIN ISO 13666:2013-10, Abschnitt 7.1)

atorisches Brillenglas

Unter dem Begriff "atorisches Brillenglas" ist ein Brillenglas mit einer atorischen Fläche zu verstehen, wobei eine atorische Fläche eine Fläche ist, die zwei zueinander senkrechte Hauptschnitte unterschiedlicher Krümmung besitzt und bei der der Querschnitt in mindestens einem der Hauptschnitte nicht kreisförmig ist (DIN ISO 13666:2013-10, Abschnitt 7.6). Bei einer torischen Fläche sind dagegen die Querschnitte in beiden Hauptschnitten nominell kreisförmig (DIN ISO 13666:2013-10, Abschnitt 7.5).

Das erfindungsgemäße Verfahren zum Erstellen eines Zieldesigns wird nachfolgend am Beispiel des Erstellen eines Zieldesigns zur Verwendung in der Optimierung eines Gleitsichtbrillenglases welches neben einer sphärischen Wirkung auch eine astigmatische Wirkung umfasst, beschrieben. Ein Gleitsichtglas ist dabei ein Brillenglas mit mindestens einer Gleitsichtfläche und einer zunehmenden (positiven Wirkung, wenn der Brillenträger nach unten blickt DIN ISO 3666:2013-10, Abschnitt 8.3.5), wobei eine Gleitsichtfläche gemäß DIN ISO 3666:2013-10, Abschnitt 7.7 eine nicht rotationssymmetrische Fläche mit einer kontinuierlichen Änderung der Krümmung über die gesamte Fläche oder ein Teil davon, die im allgemeinen dazu dient, einen zunehmenden Nahzusatz, auch Addition genannt, bereit zu stellen. Die Addition ist gemäß DIN ISO 13666:2013-10 die Differenz zwischen dem Scheitelbrechwert des Nahteils des Brillenglases und dem Scheitelbrechwert des Fernteils des Brillenglases mit einem festgelegten Verfahren. In einer Verordnung für ein Gleitsichtbrillenglas ist der Wert Addition zusätzlich zu den bereits genannten Werten in der Verordnung angegeben. Üblicherweise enthält die Verordnung außerdem einen Wert für den Pupillenabstand.

Zum Zwecke der Erläuterung der Erfindung wird angenommen, dass die mit dem Gleitsichtbrillenglases zu erzielende sphärische Wirkung in einer Verordnung durch einen Wert für Sphäre und einen Wert für die Addition angegeben ist, die zu erzielende astigmatische Wirkung durch Werte für Zylinder und Achse. Das Gleitsichtbrillenglas weist einen Fernteil und einen Nahteil auf, deren Anordnung relativ zueinander die Orientierung des Brillenglases bei seiner Nutzung festlegt und eine vorgegeben Richtung im Zieldesign bedingt. Die vorgegebene Richtung entspricht in der Regel nicht der durch die Achslage der astigmatischen Wirkung, d.h. der durch den Wert für Achse aus der Verordnung für den Nutzer, gegebenen Richtung.

Um ein Gleitsichtbrillenglas optimal an den Nutzer anpassen zu können, werden im Zieldesign auch allgemeine Gebrauchsbedingungen berücksichtigt, also Gebrauchsbedingungen, die für eine definierte Gruppe von Nutzern typische Werte für den Vorneigungswinkel, den Fassungsscheibenwinkel sowie den Hornhaut-Scheitelabstand enthalten. Neben den in der Verordnung enthaltenden Werten können in das Erstellen eines Zieldesigns zur Verwendung beim Optimieren eines Gleitsichtbrillenglases daher auch allgemeine Werte für den Fassungsscheibenwinkel, den Hornhaut-Scheitelabstand und den Vorneigungswinkel eingehen. Im Falle eines Einstärken-Brillengases wird durch die Berücksichtigung von Gebrauchsbedingungen eine Orientierung des Brillenglases und somit eine beim Erstellen des Zieldesigns zu berücksichtigende vorgegebene Richtung festgelegt.

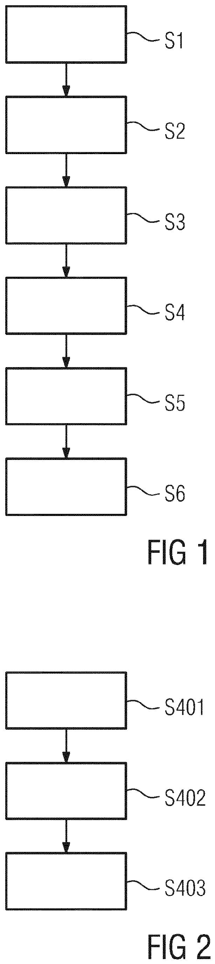

Das in Figur 1 anhand eines Ablaufdiagramms dargestellte computerimplementierte Verfahren beginnt damit, dass die in der Verordnung für den Nutzer angegebenen Werte sowie die vorgegebene Richtung repräsentierende Daten in den Computer, auf dem das Verfahren ausgeführt wird und der eine erfindungsgemäßes Datenverarbeitungssystem darstellt, bereitgestellt werden. Dieses Bereitstellen kann beispielsweise dadurch erfolgen, dass die Werte mittels einer Menschmaschine-Schnittstelle wie bspw. einer Tastatur, einem Touch-Screen, einer Spracheingabeeinheit, etc. in den Computer eingegeben werden oder, sofern die Werte elektronisch vorliegen, über eine geeignete Schnittstelle aus einem Speicher in den Computer eingelesen oder über ein Netzwerk vom Computer empfangen werden (Schritt S1).

Auf der Basis der in der Verordnung angegebenen Werte für Sphäre und Zylinder wird im vorliegenden Ausführungsbeispiel dann in Schritt S2 das sphärische Äquivalent der Werte für Sphäre und Zylinder berechnet. Dieses sphärische Äquivalent findet im vorliegenden Ausführungsbeispiel sowohl beim Bereitstellen eines Ausgangszieldesigns sowie beim Bereitstellen eines Korrekturzieldesigns zum Korrigieren des Zieldesigns Verwendung. Es sei an dieser Stelle aber angemerkt, dass das sphärische Äquivalent beim Bereitstellen des Ausgangszieldesigns und des Korrekturzieldesigns nicht notwendigerweise Berücksichtigung finden muss und durch einen frei wählbaren bestimmten sphärischen Ausgangswert ersetzt werden kann, wie später noch erläutert werden wird. Die Verwendung des sphärischen Äquivalents als bestimmtem sphärischem Ausgangswert führt jedoch dazu, dass das Ausgangszieldesign bereits eine Anpassung an die astigmatische Wirkung des Brillenglases aufweist.

In Schritt S3 wird sodann ein Ausgangszieldesign bereitgestellt, das im vorliegenden Ausführungsbeispiel das in Schritt S2 berechnete sphärische Äquivalent sowie die die vorgegebene Richtung repräsentierenden Daten berücksichtigt. Zudem berücksichtigt das Ausgangszieldesign im vorliegenden Ausführungsbeispiel auch den Wert für die Addition. Sofern das gesuchte Zieldesign ein Zieldesign für ein Einstärken-Brillenglas statt für ein Gleitsichtbrillenglas sein soll, findet selbstverständlich keine Berücksichtigung des Wertes für die Addition statt.

Das Ausgangszieldesign stellt ein Zieldesign dar, das auf die vorgegebene Richtung repräsentierenden Daten basiert und die astigmatische Wirkung nicht unmittelbar berücksichtigt. Insofern als das sphärische Äquivalent, in das der Wert für Zylinder eingeht, im Ausgangszieldesign Berücksichtigung findet, führt dies lediglich zu einer Änderung der durch das Ausgangszieldesign repräsentierten sphärischen Wirkung, ohne dass die in dem zu erzeugenden Brillenglas je nach Größe der Werte für Zylinder in den beiden Hauptschnitten unterschiedlichen erreichbaren Asphärisierungen Berücksichtigung finden. Die durch das sphärische Äquivalent angegebene sphärische Wirkung stellt lediglich einen Kompromiss dar, mit welchem die für den Nutzer spürbaren Unterschiede entlang der Hauptschnitte reduziert werden. Das Ausgangszieldesign ist somit ein Zieldesign, welches die astigmatische Wirkung des Brillenglases nicht unmittelbar berücksichtigt.

Das Bereitstellen des Ausgangszieldesigns erfolgt im vorliegenden Ausführungsbeispiel durch Auswählen eines Ausgangszieldesigns aus einer Menge des Zieldesigns, die im vorliegenden Ausführungsbeispiel durch Werte für Sphäre, Addition und durch die vorgegebene Richtung repräsentierende Daten gekennzeichnet sind. Die Auswahl des Ausgangszieldesigns im Hinblick auf den Wert Sphäre erfolgt dabei im vorliegenden Ausführungsbeispiel so, dass ein Zieldesign mit einem Wert Sphäre ausgewählt wird, der dem in Schritt S2 berechneten sphärischen Äquivalent entspricht.

Die Auswahl des Zieldesigns aus der Menge von Zieldesigns kann anhand der in Schritt S1 angegebenen Größen automatisiert erfolgen, bei Verwendung des sphärischen Äquivalents auch unter automatisierter Berechnung des sphärischen Äquivalents in Schritt S2.

Es sei an dieser Stelle angemerkt, dass das Ausgangszieldesign des vorliegenden Ausführungsbeispiels in seiner Wirkung als Summe aus einem die vorgegebene Richtung und, falls vorhanden, die Addition und ggf. weitere Parameter wie bspw. hartes oder weiches Design berücksichtigenden Zieldesigns einerseits und einem das sphärische Äquivalent berücksichtigenden Zieldesign für ein Einstärken-Brillenglas andererseits angesehen werden kann.

Damit das zu erstellende Zieldesign die in der Verordnung durch Zylinder und Achse angegebene astigmatische Wirkung berücksichtigen kann, erfolgt im Rahmen des erfindungsgemäßen Verfahrens eine Korrektur des in S3 bereit gestellten Ausgangszieldesigns mit Hilfe eines in Schritt S4 ermittelten, die eines die astigmatische Wirkung des Brillenglases unmittelbar berücksichtigenden Korrekturzieldesigns. Dieses Korrekturzieldesign berücksichtigt nicht die die vorgegebene Richtung repräsentierenden Daten, sondern lediglich den Wert für Zylinder aus der Verordnung für den Nutzer. Das Korrekturzieldesign kann insbesondere ein Zieldesign sein, welches für das Optimieren eines Einstärken-Brillenglases mit der entsprechenden astigmatischen Wirkung gedacht ist.

Figur 2 zeigt ein Ablaufdiagramm anhand dessen nachfolgend das Ermitteln des Korrekturzieldesigns beschrieben wird. Zum Ermitteln des Korrekturzieldesigns wird in Schritt S401 ein erstes Zieldesign aus einer Matrix an Zieldesigns für atorische Einstärken-Brillengläser automatisiert ausgewählt, wobei jedes Zieldesign durch einen Werte für Zylinder und einen Wert Sphäre charakterisiert ist. Als erstes Zieldesign wird dabei im vorliegenden Ausführungsbeispiel aus der Matrix an Zieldesigns ein Zieldesign ausgewählt, dessen Werte für Zylinder und Sphäre den Werten für Zylinder und Sphäre aus der Verordnung für den Nutzer am nächsten liegen. Alternativ kann das erste Zieldesign auf einer Interpolation zwischen den Werten für Zylinder und Sphäre zumindest derjenigen Zieldesigns der Matrix beruhen, die den Werten für Zylinder und Sphäre aus der Verordnung für den Nutzer benachbarte Werte für Zylinder und Sphäre aufweisen. Das in Schritt 401 ermittelte erste Zieldesign stellt ein Zieldesign zum Optimieren eines atorischen Einstärken-Brillenglases dar. In diesem Zieldesign finden keine die vorgegebene Richtung berücksichtigenden Daten Eingang.

In Schritt S402 erfolgt die Auswahl eines zweiten Zieldesigns, welches ein Zieldesign zum Optimieren eines asphärischen Einstärken-Brillenglases ist. Auch dieses Zieldesign berücksichtigt nicht die die vorgegebene Richtung repräsentierenden Daten. Es ist daher lediglich durch einen dem asphärischen Einstärken-Brillenglas zu Grunde liegenden Wert für Sphäre charakterisiert. Das Ermitteln dieses zweiten Zieldesigns erfolgt durch automatisiertes Auswählen desjenigen Zieldesign aus einer Menge von durch unterschiedliche Werte für Sphäre charakterisierten Zieldesigns, welches mit seinem Wert Sphäre dem in Schritt S2 berechneten sphärischen Äquivalent am nächsten kommt. Wie beim Ermitteln des ersten Zieldesigns in Schritt S401 kann auch das Ermitteln des zweiten Zieldesigns in Schritt S402 alternativ durch Interpolation zwischen Zieldesigns der Menge an Zieldesigns erfolgen.

Nachdem in Schritt S401 das erste Zieldesign ausgewählt worden ist und in Schritt S402 das zweite Zieldesign ausgewählt worden ist, wird auf der Basis der ausgewählten Zieldesigns in Schritt S403 das Korrekturzieldesign berechnet. Die Berechnung erfolgt dabei dadurch, dass das in Schritt S402 ausgewählte zweite Zieldesign von dem in Schritt S401 ausgewählten ersten Zieldesign subtrahiert wird. Dabei werden die in den Zieldesigns angegebenen Werte für die Bildfehlerverteilung oder die Flächeneigenschaft an einander entsprechenden Punkten der Zieldesigns voneinander abgezogen. Im Falle gerichteter Größen wie etwa der astigmatischen Restabweichung werden bei der Differenzbildung auch die Richtungen der Größen an den jeweiligen Punkten berücksichtigt, bspw. durch Bildung von Vektordifferenzen. Das so berechnete Korrekturzieldesign stellt dann das in Schritt S4 aus Figur 1 ermittelte Korrekturzieldesign dar.

In Schritt S5 erfolgt sodann die Korrektur des ausgewählten Ausgangszieldesigns anhand des ermittelten Korrekturzieldesigns. Hierzu erfolgt im vorliegenden Ausführungsbeispiel eine Addition des Ausgangszieldesigns und des Korrekturzieldesigns. Eine Addition von Zieldesigns bedeutet hierbei, dass die Werte für die Verteilung von Bildfehlern im Falle eines optischen Zieldesigns an den einander entsprechenden Stellen des Ausgangszieldesigns und des Korrekturzieldesigns aufaddiert werden. Im Falle eines Flächenzieldesigns werden entsprechend die Werte für eine Flächeneigenschaft an den einander entsprechenden Stellen des Ausgangszieldesigns und des Korrekturzieldesigns aufaddiert. Im Falle gerichteter Größen werden bei der Addition auch die Richtungen der Größen an den jeweiligen Punkten berücksichtigt, bspw. durch Vektoraddition. Bei der Addition wird zudem der Wert für Achse aus der aus der Verordnung für den Nutzer berücksichtigt, indem die Orientierung des Korrekturzieldesigns in Bezug auf das Ausgangszieldesign vor der Addition an die in der Verordnung durch den Wert für Achse angegebene Achslage angepasst wird.

Da wie oben ausgeführt das Ausgangszieldesign in seiner Wirkung als Summe aus einem die vorgegebene Richtung und, falls vorhanden, die Addition berücksichtigenden Zieldesigns und einem auf dem sphärische Mittel basierenden asphärischen Zieldesign für ein Einstärken-Brillenglas angesehen werden kann, und das zum Bilden des Korrekturzieldesigns vom ersten Zieldesign abgezogen zweite Zieldesign ebenfalls ein auf dem sphärischen Mittel basierendes asphärisches Zieldesign für ein Einstärken-Brillenglas ist, heben sich die auf dem sphärischen Mittel basierenden Beiträge in dem mit dem Korrekturzieldesign korrigierten Ausgangszieldesign auf. Aus diesem Grund kann statt des sphärischen Mittels auch ein beliebiger anderer sphärischer Ausgangswert Verwendung finden, sofern im Ausgangzieldesign und im Korrekturzieldesign der gleiche sphärische Ausgangswert Verwendung findet.

Das mit dem Korrekturzieldesign korrigierte Ausgangszieldesign wird schließlich in Schritt S6 als das im Rahmen des Verfahrens erstellte, die astigmatische Wirkung des Brillenglases berücksichtigende Zieldesign ausgegeben. Dieses Ausgeben kann dabei dadurch stattfinden, dass das Zieldesign an eine Anwendung gesendet wird oder auf ein Speichermedium gespeichert wird.

Die mit Bezug auf die Figuren 1 und 2 beschriebenen Verfahrensschritte werden typischerweise auf einen Computer ausgeführt. Um das Verfahren durchführen zu können, liegt daher ein Computerprogramm vor, welches Instruktionen umfasst, die bei Ausführung des Programms am Computer diesen veranlassen, die in den Figuren 1 und 2 dargestellten Schritte auszuführen. Das Computerprogramm kann entweder im Computer vorliegen oder in einem nicht flüchtigen computerlesbaren Speichermedium zum Laden in den Computer bereitgestellt sein. Ein solches nicht flüchtiges Computerlesbares Speichermedium kann beispielsweise eine mobile oder nicht mobile Festplatte, ein mobiles oder nicht mobiles Halbleiterlaufwerk (SSD, Solid State Drive), ein USB-Stick, oder ein sonstiges mobiles oder nicht mobiles Speichermedium sein. Im Falle eines nicht mobilen Speichermediums besteht bspw. die Möglichkeit, auf das Speichermedium über ein Netzwerk zuzugreifen.

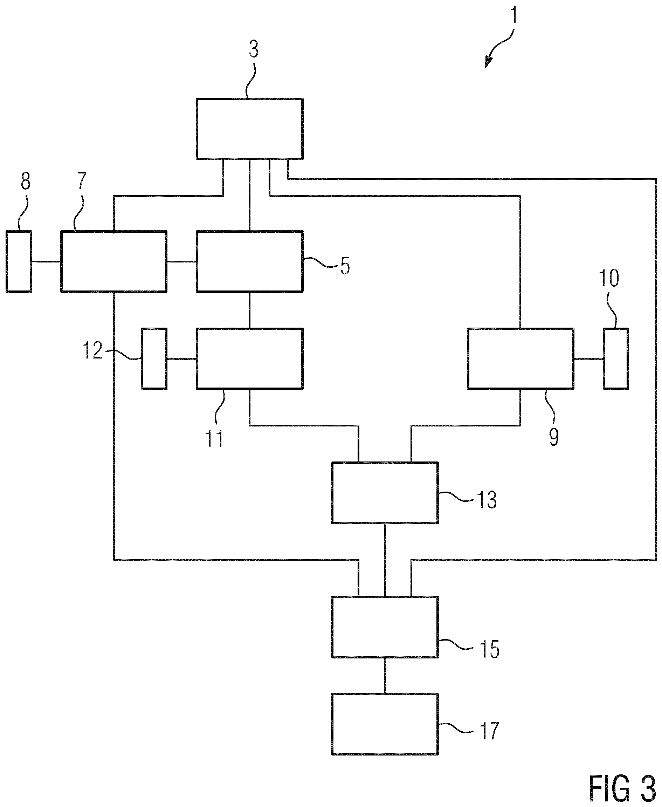

Ein erfindungsgemäßes Datenverarbeitungssystem 1, welches zum Durchführen des erfindungsgemäßen Verfahrens geeignet ist, wird nachfolgend mit Bezug auf Figur 3 beschrieben. Ein solches Datenverarbeitungssystem 1 kann ein Computer mit einem darauf laufenden erfindungsgemäßen Computerprogramm sein. Es besteht aber auch die Möglichkeit, das Datenverarbeitungssystem 1 als dedizierte Vorrichtung auszugestalten, in der die Verfahrensschritte etwa mittels anwendungsspezifischer integrierter Schaltungen (ASICs, Application Specific Integrated Circuits) fest implementiert sind.

Das in Figur 3 dargestellte Datenverarbeitungssystem 1 ist insbesondere zum Ausführen des Verfahrens mit allen in den Figuren 1 und 2 beschriebenen Verfahrensschritten ausgelegt. Es umfasst eine Schnittstelle 3, über die die in der Verordnung für den Nutzer enthaltenen Werte sowie die die vorgegebene Richtung repräsentierenden Daten in das Datenverarbeitungssystem 1 eingegeben oder eingelesen werden können oder über die die in der Verordnung für den Nutzer enthaltenen den Werte sowie die die vorgegebene Richtung repräsentierenden Daten empfangen werden können. Die Schnittstelle 3 kann daher also entweder eine Mensch-Maschinen-Schnittstelle sein, oder eine Datenschnittstelle zu einem Netzwerk oder einem externen Datenträger.

Die Schnittstelle 3 ist mit einer Berechnungseinheit 5 verbunden, die auf der Basis der über die Schnittstelle 3 in das Datenverarbeitungssystem 1 eingeführten Werte aus der Verordnung für den Nutzer für Sphäre und Zylinder das sphärische Äquivalent für diese Werte berechnet.

Die Berechnungseinheit 5 ist mit einer ersten Zieldesign-Ermittlungseinheit 7 verbunden, die zudem auch mit der Schnittstelle 3 verbunden ist. Die Berechnungseinheit 5 wählt anhand des von der Berechnungseinheit 5 empfangenen Wertes für das sphärische Äquivalent und auf der Basis der die vorgegebene Richtung repräsentierenden Daten ein Ausgangszieldesign aus, welches dem sphärische Äquivalent und den die vorgegebene Richtung repräsentierenden Daten am besten entspricht. Die Menge an Zieldesigns, aus der die Auswahl erfolgt, ist in einem Speicher 8 abgelegt. Wenn das ausgewählte Ausgangszieldesign auf dem sphärischen Äquivalent beruht, weist dieses bereits eine erste Anpassung an die verordnungsgemäße astigmatische Wirkung auf. Diese Anpassung ist jedoch nicht obligatorisch. Das ausgewählte Ausgangszieldesign kann auch auf einem anderen sphärischen Ausgangswert beruhen. Dies führt lediglich zu einem anderen Korrekturzieldesign als wenn das ausgewählte Ausgangszieldesign auf dem sphärischen Äquivalent beruht.

Das Datenverarbeitungssystem 1 enthält zwei weitere Zieldesign-Ermittlungseinheit, nämlich eine zweite Zieldesign-Ermittlungseinheit 9 und eine dritte Zieldesign-Ermittlungseinheit 11. Die zweite Zieldesign-Ermittlungseinheit 9 ist mit der Schnittstelle 3 verbunden, um von dieser denjenigen Wert aus der Verordnung für den Nutzer zu erhalten, der sich auf Zylinder beziehen. Auf der Basis des empfangenen Wertes wählt die zweite Zieldesign-Ermittlungseinheit 9 dann gemäß Schritt S401 ein Zieldesign für das Optimieren eines atorischen Einstärken-Brillenglases aus einer im Speicher 12 abgelegten Matrix aus. Diese Auswahl erfolgt so, wie mit Bezug auf Schritt S401 in Figur 3 beschrieben worden ist. Der Speicher 12 kann mit dem Speicher 8 und/oder mit dem Speicher 10 identisch sein. Statt das erste Zieldesign auszuwählen kann die zweite Zieldesign-Ermittlungseinheit 9 das erste Zieldesign auch durch eine Interpolation ermitteln, wie dies mit Bezug auf Figur 2 beschrieben worden ist.

Die dritte Zieldesign-Ermittlungseinheit 11 ist mit der Berechnungseinheit 5 verbunden, um von dieser die die das berechnete sphärische Äquivalent zu erhalten. Sie ist dazu ausgebildet, das in Schritt S402 bereit gestellte zweite Zieldesign, auszuwählen. Die Menge an Zieldesigns, aus der die Auswahl erfolgt, ist in einem Speicher 10 abgelegt. Dieser Speicher 10 enthält eine Menge an Zieldesigns für asphärische Einstärken-Brillengläser. Die dritte Zieldesign-Ermittlungseinheit 11 wählt aus der Menge an Zieldesigns dasjenige Zieldesign aus, welches mit seinem Wert für Sphäre dem berechneten sphärischen Äquivalent am nächsten kommt. Alternativ kann das Ermitteln des zweiten Zieldesigns durch die dritte Zieldesign-Ermittlungseinheit 11 auch durch eine Interpolation zwischen Zieldesigns der Menge an Zieldesigns erfolgen, wie dies mit Bezug auf Figur 2 beschrieben worden ist. Wenn in das Ausgangszieldesign ein anderer sphärischer Ausgangswert als das sphärische Mittel eingeht, geht auch in das zweite Zieldesign statt des sphärischen Mittels dieser andere sphärische Ausgangswert ein. Die Berechnungseinheit 5 ist in diesem Fall durch eine Bestimmungseinheit zum Bestimmen des sphärischen Ausgangswerts ersetzt. Diese braucht nicht mit der Schnittstelle 3 verbunden zu sein, da eine Auswahl des sphärischen Ausgangswerts nicht auf den in der Verordnung enthaltenen Daten zu basieren braucht.

Die zweite Zieldesign-Ermittlungseinheit 9 und die dritte Zieldesign-Ermittlungseinheit 11 sind mit einer Differenziereinheit 13 verbunden. Die Differenziereinheit 13 empfängt von der Auswahleinheit 9 das erste Zieldesign und von der Auswahleinheit 11 das zweite Zieldesign und zieht das zweite Zieldesign von dem ersten Zieldesign ab, um so das Korrekturzieldesign zu generieren.

Die erste Zieldesign-Ermittlungseinheit 7 und die Differenziereinheit 13 sind beide mit einer Addiereinheit 15 verbunden, die von der erste Zieldesign-Ermittlungseinheit 7 das Ausgangszieldesign und von der Differenziereinheit 13 das Korrekturzieldesign empfängt. Die Addiereinheit 15 bildet die Summe aus dem Ausgangszieldesign und dem Korrekturzieldesign, um so das gesuchte Zieldesign zu generieren. Dieses Zieldesign wird schließlich an eine Ausgangschnittstelle 17 ausgegeben, von der es beispielsweise auf ein Speichermedium gespeichert, in ein Netzwerk eingegeben oder an eine Fertigungsmaschine weitergegeben werden kann.

Das Zieldesign kann dann zusammen mit einem Ausgangsbrillenglas zum Bereitstellen eines Brillenglases genutzt werden. Das Bereitstellen des Brillenglases erfolgt im vorliegenden Ausführungsbeispiel im Rahmen eines computerimplementierten Verfahrens, so dass das Ausgangsbrillenglas lediglich ein durch seine Parameter definiertes numerisches Model ist. Die Rückfläche des Ausgangsbrillenglases, d.h. des numerischen Modelles, ist eine Freiformfläche, die durch eine Anzahl von gebietsweise definierten Funktionen beschrieben ist, wie dies eingangs erläutert worden ist.

Das Zieldesign beschreibt im vorliegenden Ausführungsbeispiel zumindest einen sphärischen Restfehler und einen astigmatischen Restfehler als Eigenschaften, die mit dem Brillenglas bis auf eine zulässige Abweichung erreicht werden sollen. Hierzu erfolgt eine Optimierung der die Freiformfläche beschreibenden gebietsweise definierten Funktionen. Die Optimierung wird anhand eines iterativen Optimierungsalgorithmus durchgeführt, bei dem in jedem Iterationsschritt die Parameterwerte der die Freiformfläche beschreibenden gebietsweise definierten Funktionen verändert werden und mit den jeweiligen Parameterwerten der aktuell erreichte sphärische Restfehler und der aktuell erreichte astigmatische Restfehler ermittelt werden. Auf der Basis des aktuell erreichten sphärischen Restfehlers und des aktuell erreichten astigmatischen Restfehlers wird der Funktionswert einer Fehlerfunktion ermittelt. Die Fehlerfunktion ist im vorliegenden Ausführungsbeispiel so gewählt, dass ihr Funktionswert umso kleiner ist je kleiner die Differenz zwischen dem aktuell erreichten sphärischen Restfehler und dem durch das Zieldesign vorgegebenen sphärischen Restfehler und die Differenz zwischen dem aktuell erreichten astigmatischen Restfehler und dem durch das Zieldesign vorgegebenen astigmatischen Restfehler sind. Wenn diese Differenzen so klein sind, dass der Funktionswert der Fehlerfunktion einen vorgegebenen Grenzwert nicht mehr überschreitet, bricht der iterative Optimierungsalgorithmus im vorliegenden Ausführungsbeispiel ab. Das Ausgangsbrillenglas mit der Freiformfläche, die durch die Parameter der gebietsweise definierten Funktionen beim Abbruch des iterativen Optimierungsalgorithmus gegeben ist, wird als das optimierte Brillenglas bereitgestellt.

Im vorliegenden Ausführungsbeispiel erfolgt die Bereitstellung durch Speichern einer numerischen Darstellung des optimierten Brillenglases auf oder in einem nicht flüchtigen Speichermedium, von wo es zur weiteren Nutzung ausgelesen oder abgerufen werden kann. Die bereitgestellte numerische Darstellung des optimierten Brillenglases kann dann zum Herstellen eines gegenständlichen Brillenglases Verwendung finden. Hierzu wird ein Ausgangskörper bereitgestellt, aus dem das Brillenglas basierend auf der bereitgestellten numerischen Darstellung des Brillenglases mittels einer computergesteuerten spanenden Bearbeitung oder einer anderen geeigneten materialabtragenden Bearbeitung hergestellt wird.

Statt wie im Vorliegenden Ausführungsbeispiel das iterative Verfahren so lange durchzuführen, bis der Funktionswert der Fehlerfunktion einen Grenzwert nicht mehr überschreitet, kann das Verfahren auch so lange durchgeführt werden, bis ein Minimum der Fehlerfunktion gefunden ist. Ein Minimum der Fehlerfunktion zeichnet sich dadurch aus, dass bei einer Veränderung der Parameter der gebietsweise definierten Funktionen der Funktionswert der Fehlerfunktion nicht mehr kleiner wird.

Obwohl im vorliegenden Ausführungsbeispiel die Rückfläche des Brillenglases optimiert worden ist, kann alternativ oder zusätzlich die Vorderfläche des Brillenglases optimiert werden. In diesem Fall würde alternativ oder zusätzlich die Vorderfläche durch gebietsweise definierte Funktionen repräsentiert und wie beschrieben optimiert werden.

Satt wie im Ausführungsbeispiel einen sphärischen Restfehler und einen astigmatischen Restfehler kann das Zieldesign in alternativen Ausführungsbeispielen eine Flächenbrechkraft und einen Flächenastigmatismus angeben. In den Iterationsschritten des Optimierungsalgorithmus werden dann die mit den jeweiligen Parameterwerten aktuell erreichte Flächenbrechkraft und der mit den jeweiligen Parameterwerten aktuell erreichte Flächenastigmatismus ermittelt.

Die vorliegende Erfindung wurde zu Erläuterungszwecken anhand konkreter Ausführungsbeispiele im Detail beschrieben. Ein Fachmann erkennt jedoch, dass er von den beschriebenen Ausführungsbeispielen abweichen kann. So sind beispielsweise die im Ausführungsbeispiel angegebenen Reihenfolgen der Schritte S3 und S4 und/oder der Schritte 401 und S402 nicht obligatorisch. Vielmehr kann die Reihenfolge auch umgedreht werden, oder die Schritte S3 und S4 bzw. die Schritte S401 und S402 können parallel ausgeführt werden. Darüber hinaus besteht keine Notwendigkeit, dass in das Ausgangszieldesign und das Korrekturzieldesign das sphärische Äquivalent aus den Werten für Sphäre und Zylinder gemäß der Verordnung für den Nutzer eingeht. Stattdessen kann in das Ausgangszieldesign und das Korrekturzieldesign ein beliebiger Wert fürs Sphäre eingehen. Ein Fachmann erkennt daher, dass der beanspruchte Schutz lediglich durch die beigefügten Ansprüche beschränkt sein soll.

**Patentansprüche**

1. Computerimplementiertes Verfahren zum Erzeugen eines eine verordnungsgemäße astigmatische Wirkung berücksichtigenden Zieldesigns, welches im Rahmen der Herstellung eines die verordnungsgemäße astigmatische Wirkung aufweisenden Brillenglases zu dessen Optimierung geeignet ist und eine Vorgabe für eine Verteilung von Bildfehlern über das Brillenglas oder von Flächeneigenschaften des Brillenglases ist, umfassend:

   - ein Bereitstellen eines Ausgangszieldesigns, bei dem die Vorgabe für die Verteilung von Bildfehlern über das Brillenglas oder von Flächeneigenschaften des Brillenglases auf einem bestimmten sphärischen Ausgangswert basiert und das die verordnungsgemäße astigmatische Wirkung des Brillenglases nicht berücksichtigt oder dadurch mittelbar berücksichtigt, dass als sphärischer Ausgangswert das sphärische Äquivalent Verwendung findet;

   **dadurch gekennzeichnet, dass**
   das Erzeugen des Zieldesigns durch eine Korrektur des Ausgangszieldesigns anhand eines die verordnungsgemäße astigmatische Wirkung des Brillenglases unmittelbar berücksichtigenden Korrekturzieldesigns, bei dem die Vorgabe für die Verteilung von Bildfehlern über das Brillenglas oder von Flächeneigenschaften des Brillenglases auf dem Wert für Zylinder und dem Wert für Sphäre aus der Verordnung für den Nutzer basiert, erfolgt, wobei

   - das Korrekturzieldesign anhand eines ersten Zieldesigns, dessen Vorgabe für die Verteilung von Bildfehlern über das Brillenglas oder von Flächeneigenschaften des Brillenglases auf dem Wert für Zylinder aus der Verordnung für den Nutzer basiert, und eines zweiten Zieldesigns, dessen Vorgabe für die Verteilung von Bildfehlern über das Brillenglas oder von Flächeneigenschaften des Brillenglases auf dem bestimmten sphärischen Ausgangswert basiert, gebildet wird, indem das zweite Zieldesign vom ersten Zieldesign subtrahiert wird, und
   - die Korrektur des Ausgangszieldesigns anhand des Korrekturzieldesigns durch Addieren des Ausgangszieldesigns und des Korrekturzieldesigns erfolgt.

2. Computerimplementiertes Verfahren nach Anspruch 1, **dadurch gekennzeichnet, dass** das zu erzeugende Zieldesign ein Zieldesign zur Verwendung beim Optimieren eines eine bestimmte Orientierung bei seiner Nutzung aufweisenden Brillenglases ist und das Ausgangszieldesign eine vorgegebene Richtung repräsentierende Daten berücksichtigt, wobei die vorgegebene Richtung durch die Orientierung des Brillenglases bei seiner Nutzung bedingt ist.

3. Computerimplementiertes Verfahren nach Anspruch 1 oder Anspruch 2, **dadurch gekennzeichnet, dass** das Korrekturzieldesign ein Zieldesign für ein Einstärken-Brillenglas ist.

4. Computerimplementiertes Verfahren nach Anspruch 3, **dadurch gekennzeichnet, dass** das Korrekturzieldesign ein Zieldesign für ein atorisches Einstärken-Brillenglas ist.

5. Computerimplementiertes Verfahren nach einem der Ansprüche 1 bis 4, **dadurch gekennzeichnet, dass** beim Korrigieren des Ausgangszieldesigns anhand des Korrekturzieldesigns der Wert für Achse aus der Verordnung für den Nutzer verwendet wird, um die Orientierung des Korrekturzieldesigns in Bezug auf das Ausgangszieldesign festzulegen.

6. Computerimplementiertes Verfahren nach einem der Ansprüche 1 bis 5, **dadurch gekennzeichnet, dass** das Zieldesign, dessen Vorgabe für die Verteilung von Bildfehlern über das Brillenglas oder von Flächeneigenschaften des Brillenglases auf dem bestimmten sphärischen Ausgangswert basiert und das Zieldesign, dessen Vorgabe für die Verteilung von Bildfehlern über das Brillenglas oder von Flächeneigenschaften des Brillenglases auf dem Wert für Zylinder aus der Verordnung für den Nutzer basiert, jeweils Zieldesigns für die Optimierung von Einstärken-Brillengläsern sind.

**7.** Computerimplementiertes Verfahren nach Anspruch 6, **dadurch gekennzeichnet, dass** das Zieldesign für die Optimierung von Einstärken-Brillengläsern, dessen Vorgabe für die Verteilung von Bildfehlern über das Brillenglas oder von Flächeneigenschaften des Brillenglases auf dem Wert für Zylinder aus der Verordnung für den Nutzer basiert, anhand einer Anzahl von Zieldesigns für die Optimierung von Einstärken-Brillengläsern, die jeweils durch eine Kombination eines Wertes für Sphäre und eines Wertes für Zylinder charakterisiert sind, ermittelt wird.

**8.** Computerimplementiertes Verfahren nach Anspruch 7, **dadurch gekennzeichnet, dass** das Ermitteln des Zieldesigns für die Optimierung von Einstärken-Brillengläsern, dessen Vorgabe für die Verteilung von Bildfehlern über das Brillenglas oder von Flächeneigenschaften des Brillenglases auf dem Wert für Zylinder aus der Verordnung für den Nutzer basiert, durch Auswählen eines Zieldesigns aus der Anzahl von Zieldesigns für Einstärken-Brillengläser erfolgt.

**9.** Computerimplementiertes Verfahren nach Anspruch 7, **dadurch gekennzeichnet, dass** das Ermitteln des auf dem Wert für Zylinder aus der Verordnung für den Nutzer basierenden Zieldesigns für ein Einstärken-Brillenglas durch Interpolieren zwischen zwei Zieldesigns aus der Anzahl von Zieldesigns für Einstärken-Brillengläser erfolgt.

**10.** Computerprogramm zum Erzeugen eines eine verordnungsgemäße astigmatische Wirkung berücksichtigenden Zieldesigns, welches zur Verwendung im Rahmen der Herstellung eines die verordnungsgemäße astigmatische Wirkung aufweisenden Brillenglases zu dessen Optimierung geeignet ist und eine Vorgabe für eine Verteilung von Bildfehlern über das Brillenglas oder von Flächeneigenschaften des Brillenglases ist, umfassend Instruktionen, die, wenn sie auf einem Computer ausgeführt werden, den Computer dazu veranlassen, ein Ausgangszieldesign bereitzustellen, bei dem die Vorgabe für die Verteilung von Bildfehlern über das Brillenglas oder von Flächeneigenschaften des Brillenglases auf einem bestimmten sphärischen Ausgangswert basiert und das die verordnungsgemäße astigmatische Wirkung des Brillenglases nicht berücksichtigt oder dadurch mittelbar berücksichtigt, dass als sphärischer Ausgangswert das sphärische Äquivalent Verwendung findet, bereitzustellen, **dadurch gekennzeichnet, dass** das Computerprogramm außerdem Instruktionen umfasst, die, wenn sie auf einem Computer ausgeführt werden, den Computer dazu veranlassen, das Zieldesign durch eine Korrektur des Ausgangszieldesigns anhand eines die astigmatische Wirkung des Brillenglases unmittelbar berücksichtigenden Korrekturzieldesigns, bei dem die Vorgabe für die Verteilung von Bildfehlern über das Brillenglas oder von Flächeneigenschaften des Brillenglases auf dem Wert für Zylinder und dem Wert für Sphäre aus der Verordnung für den Nutzer basiert, zu erzeugen, wobei

- das Korrekturzieldesign anhand eines ersten Zieldesigns, dessen Vorgabe für die Verteilung von Bildfehlern über das Brillenglas oder von Flächeneigenschaften des Brillenglases auf dem Wert für Zylinder aus der Verordnung für den Nutzer basiert, und eines zweiten Zieldesigns, dessen Vorgabe für die Verteilung von Bildfehlern über das Brillenglas oder von Flächeneigenschaften des Brillenglases auf dem bestimmten sphärischen Ausgangswert basiert, gebildet wird, indem das zweite Zieldesign vom ersten Zieldesign subtrahiert wird, und
- die Korrektur des Ausgangszieldesigns anhand des Korrekturzieldesigns durch Addieren des Ausgangszieldesigns und des Korrekturzieldesigns erfolgt.

**11.** Datenverarbeitungssystem zum Erzeugen eines eine verordnungsgemäße astigmatische Wirkung berücksichtigenden Zieldesigns, welches zur Verwendung im Rahmen der Herstellung eines die verordnungsgemäße astigmatische Wirkung aufweisenden Brillenglases zu dessen Optimierung geeignet ist und eine Vorgabe für eine Verteilung von Bildfehlern über das Brillenglas oder von Flächeneigenschaften des Brillenglases ist, wobei das Datenverarbeitungssystem einen Prozessor und wenigstens einen Speicher umfasst und der Prozessor dazu ausgestaltet ist, basierend auf Instruktionen eines im Speicher gespeicherten Computerprogramms ein Ausgangszieldesign bereitzustellen, bei dem die Vorgabe für die Verteilung von Bildfehlern über das Brillenglas oder von Flächeneigenschaften des Brillenglases auf einem bestimmten sphärischen Ausgangswert basiert und das die verordnungsgemäße astigmatische Wirkung des Brillenglases nicht berücksichtigt oder dadurch mittelbar berücksichtigt, dass als sphärischer Ausgangswert das sphärische Äquivalent Verwendung findet, **dadurch gekennzeichnet, dass** der Prozessor außerdem dazu ausgestaltet ist, basierend auf den Instruktionen des im Speicher gespeicherten Computerprogramms das Zieldesign durch eine Korrektur des Ausgangszieldesigns anhand eines die verordnungsgemäße astigmatische Wirkung des Brillenglases unmittelbar berücksichtigenden Korrekturzieldesigns, bei dem die Vorgabe für die Verteilung von Bildfehlern über das Brillenglas oder von Flächeneigenschaften des Brillenglases auf dem Wert für Zylinder und dem Wert für Sphäre aus der Verordnung für den Nutzer basiert, zu erzeugen, wobei

- das Korrekturzieldesign anhand eines ersten Zieldesigns, dessen Vorgabe für die Verteilung von Bildfehlern über das Brillenglas oder von Flächeneigenschaften des Brillenglases auf dem Wert für Zylinder aus der Verordnung für den Nutzer basiert, und eines zweiten Zieldesigns, dessen Vorgabe für die Verteilung von Bildfehlern über das Brillenglas oder von Flächeneigenschaften des Brillenglases auf dem bestimmten sphärischen Ausgangswert basiert, gebildet wird, indem das zweite Zieldesign vom ersten Zieldesign subtrahiert wird, und
- die Korrektur des Ausgangszieldesigns anhand des Korrekturzieldesigns durch Addieren des Ausgangszieldesigns und des Korrekturzieldesigns erfolgt.

**12.** Nichtflüchtiges computerlesbares Speichermedium mit darauf gespeicherten Instruktionen zum Erzeugen eines eine verordnungsgemäße astigmatische Wirkung berücksichtigenden Zieldesigns, welches zur Verwendung im Rahmen der Herstellung eines die verordnungsgemäße astigmatische Wirkung aufweisenden Brillenglases zu dessen Optimierung geeignet ist und eine Vorgabe für eine Verteilung von Bildfehlern über das Brillenglas oder von Flächeneigenschaften des Brillenglases ist, wobei die Instruktionen, wenn sie auf einem Computer ausgeführt werden, den Computer dazu veranlassen, ein Ausgangszieldesign bereitzustellen, bei dem die Vorgabe für die Verteilung von Bildfehlern über das Brillenglas oder von Flächeneigenschaften des Brillenglases auf einem bestimmten sphärischen Ausgangswert basiert und das die verordnungsgemäße astigmatische Wirkung des Brillenglases nicht berücksichtigt oder dadurch mittelbar berücksichtigt, dass als sphärischer Ausgangswert das sphärische Äquivalent Verwendung findet, **dadurch gekennzeichnet, dass** das Speichermedium außerdem darauf gespeicherte Instruktionen umfasst, die, wenn sie auf einem Computer ausgeführt werden, den Computer dazu veranlassen, das Zieldesign durch eine Korrektur des Ausgangszieldesigns anhand eines die verordnungsgemäße astigmatische Wirkung des Brillenglases unmittelbar berücksichtigenden Korrekturzieldesigns, bei dem die Vorgabe für die Verteilung von Bildfehlern über das Brillenglas oder von Flächeneigenschaften des Brillenglases auf dem Wert für Zylinder und dem Wert für Sphäre aus der Verordnung für den Nutzer basiert, zu erzeugen, wobei

- das Korrekturzieldesign anhand eines ersten Zieldesigns, dessen Vorgabe für die Verteilung von Bildfehlern über das Brillenglas oder von Flächeneigenschaften des Brillenglases auf dem Wert für Zylinder aus der Verordnung für den Nutzer basiert, und eines zweiten Zieldesigns, dessen Vorgabe für die Verteilung von Bildfehlern über das Brillenglas oder von Flächeneigenschaften des Brillenglases auf dem bestimmten sphärischen Ausgangswert basiert, gebildet wird, indem das zweite Zieldesign vom ersten Zieldesign subtrahiert wird, und
- die Korrektur des Ausgangszieldesigns anhand des Korrekturzieldesigns durch Addieren des Ausgangszieldesigns und des Korrekturzieldesigns erfolgt.

**13.** Verfahren zum Bereitstellen eines Brillenglases, in dem

- ein Ausgangsbrillenglas und ein Zieldesign, welches eine Vorgabe für eine Verteilung von Bildfehlern über das Brillenglas oder von Flächeneigenschaften des Brillenglases ist, vorgegeben werden,
- anhand eines Optimieralgorithmus wenigstens eine Fläche des Ausgangsbrillenglases derart optimiert wird, dass das Ausgangsbrillenglas mit der optimierten Fläche die durch das Zieldesign angegebene Vorgabe für eine Verteilung von Bildfehlern über das Brillenglas oder von Flächeneigenschaften erreicht, und
- das die optimierte Fläche aufweisende Ausgangsbrillenglas als das Brillenglas bereitgestellt wird,

**dadurch gekennzeichnet, dass**
das Zieldesign gemäß dem computerimplementierten Verfahren nach einem der Ansprüche 1 bis 9 vorgegeben wird.

**14.** Verfahren nach Anspruch 13, **dadurch gekennzeichnet, dass** das Bereitstellen des Brillenglases durch Bereitstellen einer numerischen Darstellung des Brillenglases zur Verwendung beim Herstellen eines gegenständlichen Brillenglases erfolgt, wobei die numerische Darstellung des Brillenglases durch eine numerische Darstellung des die optimierte Fläche aufweisenden Ausgangsbrillenglases gegeben ist.

**15.** Verfahren zum Herstellen eines Brillenglases, in dem eine Ausgangskörper bereitgestellt wird, aus dem das Brillenglas basierend auf einer bereitgestellten numerischen Darstellung des Brillenglases mittels materialabtragender Bearbeitung hergestellt wird, **dadurch gekennzeichnet, dass** die numerischen Darstellung des Brillenglases mittels des Verfahrens gemäß Anspruch 14 bereitgestellt wird.

## Claims

**1.** Computer-implemented method for generating a target design which considers an astigmatic power according to the prescription and is suitable when producing a spectacle lens with the astigmatic power according to the prescription for the optimization thereof and specifies a distribution of image aberrations over the spectacle lens or of surface properties of the spectacle lens, said method comprising:

- provision of an initial target design in which the prescription for the distribution of image aberrations over the spectacle lens or of surface properties of the spectacle lens is based on a certain spherical initial value and which does not consider the astigmatic power of the spectacle lens according to the prescription or indirectly considers it by virtue of the spherical equivalent being used as the spherical initial value;

**characterized in that**
the target design is generated by correcting the initial target design on the basis of a correction target design which directly considers the astigmatic power of the spectacle lens according to the prescription and in which the prescription for the distribution of image aberrations over the spectacle lens or of surface properties of the spectacle lens is based on the cylinder value and the sphere value from the prescription for the user, wherein

- the correction target design is formed on the basis of a first target design, the prescription of which for the distribution of image aberrations over the spectacle lens or of surface properties of the spectacle lens is based on the cylinder value from the prescription for the user, and a second target design, the prescription of which for the distribution of image aberrations over the spectacle lens or of surface properties of the spectacle lens is based on the certain spherical initial value, by subtracting the second target design from the first target design, and
- the initial target design is corrected on the basis of the correction target design by adding the initial target design and the correction target design.

2. Computer-implemented method according to Claim 1, **characterized in that** the target design to be generated is a target design for use when optimizing a spectacle lens having a certain orientation during its use and the initial target design considers data representing a specified direction, wherein the specified direction is necessitated by the orientation of the spectacle lens during its use.

3. Computer-implemented method according to Claim 1 or Claim 2, **characterized in that** the correction target design is a target design for a single-vision lens.

4. Computer-implemented method according to Claim 3, **characterized in that** the correction target design is a target design for an atoroidal single-vision lens.

5. Computer-implemented method according to any one of Claims 1 to 4, **characterized in that** the axis value from the prescription for the user is used during the correction of the initial target design on the basis of the correction target design in order to set the orientation of the correction target design in relation to the initial target design.

6. Computer-implemented method according to any one of Claims 1 to 5, **characterized in that** the target design, the prescription of which for the distribution of image aberrations over the spectacle lens or of surface properties of the spectacle lens is based on the certain spherical initial value, and the target design, the prescription of which for the distribution of image aberrations over the spectacle lens or of surface properties of the spectacle lens is based on the cylinder value from the prescription for the user, are each target designs for optimizing single-vision lenses.

7. Computer-implemented method according to Claim 6, **characterized in that** the target design for optimizing single-vision lenses, the prescription of which for the distribution of image aberrations over the spectacle lens or of surface properties of the spectacle lens is based on the cylinder value from the prescription for the user, is determined on the basis of a number of target designs for optimizing single-vision lenses which are each **characterized by** a combination of a sphere value and a cylinder value.

8. Computer-implemented method according to Claim 7, **characterized in that** the ascertainment of the target design for optimizing single-vision lenses, the prescription of which for the distribution of image aberrations over the spectacle lens or of surface properties of the spectacle lens is based on the cylinder value from the prescription for the user, is implemented by selecting a target design from the number of target designs for single-vision lenses.

9. Computer-implemented method according to Claim 7, **characterized in that** the ascertainment of the target design for a single-vision lens based on the cylinder value from the prescription for the user is implemented by interpolating between two target designs from the number of target designs for single-vision lenses.

10. Computer program for generating a target design which considers an astigmatic power according to the prescription and is suitable for use when producing a spectacle lens with the astigmatic power according to the prescription for the optimization thereof and specifies a distribution of image aberrations over the spectacle lens or of surface properties of the spectacle lens, comprising instructions which, when executed on a computer, prompt the computer to provide an initial target design in which the prescription for the distribution of image aberrations over the spectacle lens or of surface properties of the spectacle lens is based on a certain spherical initial value and which does not consider the astigmatic power of the spectacle lens according to the prescription or indirectly considers it by virtue of the spherical equivalent being used as the spherical initial value, **characterized in that** the computer program moreover comprises instructions which, when executed on a computer, prompt the computer to generate the target design by correcting the initial target design on the basis of a correction target design which directly considers the astigmatic power of the spectacle lens and in which the prescription for the distribution of image aberrations over the spectacle lens or of surface properties of the spectacle lens is based on the cylinder value and the sphere value from the prescription for the user, wherein

- the correction target design is formed on the basis of a first target design, the prescription of which for the distribution of image aberrations over the spectacle lens or of surface properties of the spectacle lens is based on the cylinder value from the prescription for the user, and a second target design, the prescription of which for the distribution of image aberrations over the spectacle lens or of surface properties of the spectacle lens is based on the certain spherical initial value, by subtracting the second target design from the first target design, and
- the initial target design is corrected on the basis of the correction target design by adding the initial target design and the correction target design.

11. Data processing system for generating a target design which considers an astigmatic power according to the prescription and is suitable for use when producing a spectacle lens with the astigmatic power according to the prescription for the optimization thereof and specifies a distribution of image aberrations over the spectacle lens or of surface properties of the spectacle lens, wherein the data processing system comprises a processor and at least one memory and the processor is configured, on the basis of instructions of a computer program stored in the memory, to provide an initial target design in which the prescription for the distribution of image aberrations over the spectacle lens or of surface properties of the spectacle lens is based on a certain spherical initial value and which does not consider the astigmatic power of the spectacle lens according to the prescription or indirectly considers it by virtue of the spherical equivalent being used as the spherical initial value, **characterized in that** the processor is moreover configured, on the basis of the instructions of the computer program stored in the memory, to generate the target design by correcting the initial target design on the basis of a correction target design which directly considers the astigmatic power of the spectacle lens according to the prescription and in which the prescription for the distribution of image aberrations over the spectacle lens or of surface properties of the spectacle lens is based on the cylinder value and the sphere value from the prescription for the user, wherein

- the correction target design is formed on the basis of a first target design, the prescription of which for the distribution of image aberrations over the spectacle lens or of surface properties of the spectacle lens is based on the cylinder value from the prescription for the user, and a second target design, the prescription of which for the distribution of image aberrations over the spectacle lens or of surface properties of the spectacle lens is based on the certain spherical initial value, by subtracting the second target design from the first target design, and
- the initial target design is corrected on the basis of the correction target design by adding the initial target design and the correction target design.

12. Non-volatile computer-readable storage medium with instructions stored thereon for generating a target design which considers an astigmatic power according to the prescription and is suitable for use when producing a spectacle lens with the astigmatic power according to the prescription for the optimization thereof and specifies a distribution of image aberrations over the spectacle lens or of surface properties of the spectacle lens, wherein the instructions, when executed on a computer, prompt the computer to provide an initial target design in which the prescription for the distribution of image aberrations over the spectacle lens or of surface properties of the spectacle lens is based on a certain spherical initial value and which does not consider the astigmatic power of the spectacle lens according to the prescription or indirectly considers it by virtue of the spherical equivalent being used as the spherical initial value, **characterized in that** the storage medium moreover comprises instructions stored thereon which, when executed on a computer, prompt the computer to generate the target design by correcting the initial target design on the basis of a correction target design which directly considers the astigmatic power of the spectacle lens according to the prescription and in which the prescription for the distribution of image aberrations over the spectacle lens or of surface properties of the spectacle lens is based on the cylinder value and the sphere value from the prescription for the user, wherein

- the correction target design is formed on the basis of a first target design, the prescription of which for the distribution of image aberrations over the spectacle lens or of surface properties of the spectacle lens is based on the cylinder value from the prescription for the user, and a second target design, the prescription of which for the distribution of image aberrations over the spectacle lens or of surface properties of the spectacle lens is based on the certain spherical initial value, by subtracting the second target design from the first target design, and
- the initial target design is corrected on the basis of the correction target design by adding the initial target design and the correction target design.

**13.** Method for providing a spectacle lens, wherein

- an initial spectacle lens and a target design, which specifies a distribution of image aberrations over the spectacle lens or surface properties of the spectacle lens, are specified,
- an optimization algorithm is used to optimize at least one surface of the initial spectacle lens in such a way that the initial spectacle lens with the optimized surface achieves the specification for a distribution of image aberrations over the spectacle lens or of surface properties, as specified by the target design, and
- the initial spectacle lens having the optimized surface is provided as the spectacle lens,

**characterized in that**
the target design is specified in accordance with the computer-implemented method according to any one of Claims 1 to 9.

**14.** Method according to Claim 13, **characterized in that** the provision of the spectacle lens is implemented by the provision of a numerical representation of the spectacle lens for use when producing a physical spectacle lens, wherein the numerical representation of the spectacle lens is given by a numerical representation of the initial spectacle lens having the optimized surface.

**15.** Method for producing a spectacle lens, wherein an initial body is provided from which the spectacle lens is produced on the basis of a provided numerical representation of the spectacle lens by means of material-ablating processing, **characterized in that** the numerical representation of the spectacle lens is provided by means of the method according to Claim 14.

**Revendications**

**1.** Procédé mis en oeuvre par ordinateur pour la génération d'une conception cible prenant en compte un effet astigmatique conforme à une prescription, lequel est adapté, dans le cadre de la fabrication d'un verre de lunettes présentant l'effet astigmatique conforme à la prescription, à son optimisation et constitue une spécification pour une répartition de défauts d'image sur le verre de lunettes ou de propriétés de surface du verre de lunettes, comprenant :

- la fourniture d'une conception cible initiale, dans laquelle la spécification de la répartition de défauts d'image sur le verre de lunettes ou de propriétés de surface du verre de lunettes est basée sur une valeur sphérique initiale déterminée et ne prend pas en compte l'effet astigmatique conforme à la prescription du verre de lunettes ou le prend en compte indirectement en utilisant l'équivalent sphérique en tant que valeur sphérique initiale ;

**caractérisé en ce que**
la génération de la conception cible par une correction de la conception cible initiale, au moyen d'une conception cible de correction prenant en compte directement l'effet astigmatique conforme à la prescription du verre de lunettes, dans laquelle la spécification de la répartition de défauts d'image sur le verre de lunettes ou de propriétés de surface du verre de lunettes est basée sur la valeur de cylindre et la valeur de sphère provenant de la prescription destinée à l'utilisateur, dans lequel

- la conception cible de correction est établie au moyen d'une première conception cible, dont la spécification de la répartition de défauts d'image sur le verre de lunettes ou de propriétés de surface du verre de lunettes est basée sur la valeur de cylindre provenant de la prescription destinée à l'utilisateur, et d'une deuxième conception cible, dont la spécification de la répartition de défauts d'image sur le verre de lunettes ou de propriétés de surface du verre de lunettes est basée sur la valeur sphérique initiale déterminée, en soustrayant la deuxième conception cible à la première conception cible, et
- la correction de la conception cible initiale au moyen de la conception cible de correction est effectuée en additionnant la conception cible initiale et la conception cible de correction.

2. Procédé mis en oeuvre par ordinateur selon la revendication 1, **caractérisé en ce que** la conception cible à générer est une conception cible destinée à être utilisée dans l'optimisation d'un verre de lunettes présentant une orientation déterminée lors de son utilisation et **en ce que** la conception cible initiale prend en compte des données représentant une direction prédéterminée, dans lequel la direction prédéterminée est conditionnée par l'orientation du verre de lunettes lors de son utilisation.

3. Procédé mis en oeuvre par ordinateur selon la revendication 1 ou la revendication 2, **caractérisé en ce que** la conception cible de correction est une conception cible destinée à un verre de lunettes unifocal.

4. Procédé mis en oeuvre par ordinateur selon la revendication 3, **caractérisé en ce que** la conception cible de correction est une conception cible destinée à un verre de lunettes unifocal atorique.

5. Procédé mis en oeuvre par ordinateur selon l'une des revendications 1 à 4, **caractérisé en ce que**, lors de la correction de la conception cible initiale au moyen de la conception cible de correction, la valeur d'axe provenant de la prescription destinée à l'utilisateur est utilisée pour établir l'orientation de la conception cible de correction par rapport à la conception cible initiale.

6. Procédé mis en oeuvre par ordinateur selon l'une des revendications 1 à 5, **caractérisé en ce que** la conception cible dont la spécification de la répartition de défauts d'image sur le verre de lunettes ou de propriétés de surface du verre de lunettes est basée sur la valeur sphérique initiale déterminée et **en ce que** la conception cible dont la spécification de la répartition de défauts d'image sur le verre de lunettes ou de propriétés de surface du verre de lunettes est basée sur la valeur de cylindre provenant de la prescription destinée à l'utilisateur, sont respectivement des conceptions cibles destinées à l'optimisation de verres de lunettes unifocaux.

7. Procédé mis en oeuvre par ordinateur selon la revendication 6, **caractérisé en ce que** la conception cible destinée à l'optimisation de verres de lunettes unifocaux, dont la spécification de la répartition de défauts d'image sur le verre de lunettes ou de propriétés de surface du verre de lunettes est basée sur la valeur de cylindre provenant de la prescription destinée à l'utilisateur, est déterminée au moyen d'un certain nombre de conceptions cibles destinées à l'optimisation de verres de lunettes unifocaux, qui sont respectivement **caractérisées par** une combinaison d'une valeur de sphère et d'une valeur de cylindre.

8. Procédé mis en oeuvre par ordinateur selon la revendication 7, **caractérisé en ce que** la détermination de la conception cible destinée à l'optimisation de verres de lunettes unifocaux, dont la spécification de la répartition de défauts d'image sur le verre de lunettes ou de propriétés de surface du verre de lunettes est basée sur la valeur de cylindre provenant de la prescription destinée à l'utilisateur, est effectuée en sélectionnant une conception cible parmi ledit nombre de conceptions cibles destinées à des verres de lunettes unifocaux.

9. Procédé mis en oeuvre par ordinateur selon la revendication 7, **caractérisé en ce que** la détermination de la conception cible destinée à un verre de lunettes unifocal, sur la base de la valeur de cylindre provenant de la prescription destinée à l'utilisateur, est effectuée par interpolation entre deux conceptions cibles parmi ledit nombre de conceptions cibles destinées à des verres de lunettes unifocaux.

10. Programme d'ordinateur pour la génération d'une conception cible prenant en compte un effet astigmatique conforme à une prescription, lequel est adapté pour l'utilisation dans le cadre de la fabrication d'un verre de lunettes présentant l'effet astigmatique conforme à la prescription aux fins de son optimisation et constitue une spécification pour une répartition de défauts d'image sur le verre de lunettes ou de propriétés de surface du verre de lunettes, comprenant des instructions qui, lorsqu'elles sont exécutées sur un ordinateur, amènent l'ordinateur à fournir une conception cible initiale, dans laquelle la spécification de la répartition de défauts d'image sur le verre de lunettes ou de propriétés de surface du verre de lunettes est basée sur une valeur sphérique initiale déterminée et ne prend pas en compte l'effet astigmatique conforme à la prescription du verre de lunettes ou le prend en compte indirectement en utilisant l'équivalent sphérique en tant que valeur sphérique initiale,
**caractérisé en ce que** le programme d'ordinateur comprend en outre des instructions qui, lorsqu'elles sont exécutées sur un ordinateur, amènent l'ordinateur à générer la conception cible par une correction de la conception cible initiale, au moyen d'une conception cible de correction prenant en compte directement l'effet astigmatique du verre de lunettes, dans laquelle la spécification de la répartition de défauts d'image sur le verre de lunettes ou de propriétés de surface du verre de lunettes est basée sur la valeur de cylindre et la valeur de sphère provenant de la prescription destinée à l'utilisateur, dans lequel

- la conception cible de correction est établie au moyen d'une première conception cible, dont la spécification de la répartition de défauts d'image sur le verre de lunettes ou de propriétés de surface du verre de lunettes est basée sur la valeur de cylindre provenant de la prescription destinée à l'utilisateur, et d'une deuxième conception cible, dont la spécification de la répartition de défauts d'image sur le verre de lunettes ou de propriétés de surface du verre de lunettes est basée sur la valeur sphérique initiale déterminée, en soustrayant la deuxième conception cible à la première conception cible, et
- la correction de la conception cible initiale au moyen de la conception cible de correction est effectuée en additionnant la conception cible initiale et la conception cible de correction.

11. Système de traitement de données pour la génération d'une conception cible prenant en compte un effet astigmatique conforme à une prescription, lequel est adapté pour l'utilisation dans le cadre de la fabrication d'un verre de lunettes présentant l'effet astigmatique conforme à la prescription aux fins de son optimisation et constitue une spécification pour une répartition de défauts d'image sur le verre de lunettes ou de propriétés de surface du verre de lunettes, dans lequel le système de traitement de données comprend un processeur et au moins une mémoire et le processeur est conçu pour fournir, sur la base d'instructions d'un programme d'ordinateur stocké dans la mémoire, une conception cible initiale, dans laquelle la spécification de la répartition de défauts d'image sur le verre de lunettes ou de propriétés de surface du verre de lunettes est basée sur une valeur sphérique initiale déterminée et ne prend pas en compte l'effet astigmatique conforme à la prescription du verre de lunettes ou le prend en compte indirectement en utilisant l'équivalent sphérique en tant que valeur sphérique initiale, **caractérisé en ce que** le processeur est en outre conçu pour déterminer, sur la base des instructions du programme d'ordinateur stocké dans la mémoire, la conception cible par une correction de la conception cible initiale, au moyen d'une conception cible de correction prenant en compte directement l'effet astigmatique conforme à la prescription du verre de lunettes, dans laquelle la spécification de la répartition de défauts d'image sur le verre de lunettes ou de propriétés de surface du verre de lunettes est basée sur la valeur de cylindre et la valeur de sphère provenant de la prescription destinée à l'utilisateur, dans lequel

- la conception cible de correction est établie au moyen d'une première conception cible, dont la spécification de la répartition de défauts d'image sur le verre de lunettes ou de propriétés de surface du verre de lunettes est basée sur la valeur de cylindre provenant de la prescription destinée à l'utilisateur, et d'une deuxième conception cible, dont la spécification de la répartition de défauts d'image sur le verre de lunettes ou de propriétés de surface du verre de lunettes est basée sur la valeur sphérique initiale déterminée, en soustrayant la deuxième conception cible à la première conception cible, et
- la correction de la conception cible initiale au moyen de la conception cible de correction est effectuée en additionnant la conception cible initiale et la conception cible de correction.

12. Support de stockage non volatil lisible par ordinateur sur lequel sont stockées des instructions pour la génération d'une conception cible prenant en compte un effet astigmatique conforme à une prescription, lequel est adapté pour l'utilisation dans le cadre de la fabrication d'un verre de lunettes présentant l'effet astigmatique conforme à la prescription aux fins de son optimisation et constitue une spécification pour une répartition de défauts d'image sur le verre de lunettes ou de propriétés de surface du verre de lunettes, dans lequel les instructions, lorsqu'elles sont exécutées sur un ordinateur, amènent l'ordinateur à fournir une conception cible initiale, dans laquelle la spécification de la répartition de défauts d'image sur le verre de lunettes ou de propriétés de surface du verre de lunettes est basée sur une valeur sphérique initiale déterminée, et ne prend pas en compte l'effet astigmatique conforme à la prescription du verre de lunettes ou le prend en compte indirectement en utilisant l'équivalent sphérique en tant que valeur sphérique initiale, **caractérisé en ce que** le support de stockage comprend en outre des instructions stockées sur celui-ci qui, lorsqu'elles sont exécutées sur un ordinateur, amènent l'ordinateur à générer la conception cible par une correction de la conception cible initiale, au moyen d'une conception cible de correction prenant en compte directement l'effet astigmatique conforme à la prescription du verre de lunettes, dans laquelle la spécification de la répartition de défauts d'image sur le verre de lunettes ou de propriétés de surface du verre de lunettes est basée sur la valeur de cylindre et la valeur de sphère provenant de la prescription destinée à l'utilisateur, dans lequel

- la conception cible de correction est établie au moyen d'une première conception cible, dont la spécification de la répartition de défauts d'image sur le verre de lunettes ou de propriétés de surface du verre de lunettes est basée sur la valeur de cylindre provenant de la prescription destinée à l'utilisateur, et d'une deuxième conception cible, dont la spécification de la répartition de défauts d'image sur le verre de lunettes ou de propriétés de surface du verre de lunettes est basée sur la valeur sphérique initiale déterminée, en soustrayant la deuxième conception cible à la première conception cible, et
- la correction de la conception cible initiale au moyen de la conception cible de correction est effectuée en additionnant la conception cible initiale et la conception cible de correction.

**13.** Procédé pour la fourniture d'un verre de lunettes, dans lequel

- un verre de lunettes initial et une conception cible, qui est une spécification de la répartition de défauts d'image sur le verre de lunettes ou de propriétés de surface du verre de lunettes, sont prédéfinis,
- au moyen d'un algorithme d'optimisation, au moins une surface du verre de lunettes initial est optimisée de telle sorte que le verre de lunettes initial présentant la surface optimisée atteigne la spécification spécifiée par la conception cible pour une répartition de défauts d'image sur le verre de lunettes ou de propriétés de surface, et
- le verre de lunettes initial présentant la surface optimisée est fourni en tant que ledit verre de lunettes,

**caractérisé en ce que**
la conception cible est prédéfinie conformément au procédé mis en oeuvre par ordinateur selon l'une des revendications 1 à 9.

**14.** Procédé selon la revendication 13, **caractérisé en ce que** la fourniture du verre de lunettes est effectuée par fourniture d'une représentation numérique du verre de lunettes à utiliser lors de la fabrication du verre de lunettes en question, dans lequel la représentation numérique du verre de lunettes est donnée par une représentation numérique du verre de lunettes initial présentant la surface optimisée.

**15.** Procédé pour la fabrication d'un verre de lunettes, dans lequel il est fourni un corps de départ à partir duquel le verre de lunettes est fabriqué par usinage par enlèvement de matière sur la base d'une représentation numérique fournie du verre de lunettes,
**caractérisé en ce que** la représentation numérique du verre de lunettes est fournie par le procédé selon la revendication 14.

S1

S2

S3

S4

S5

S6

FIG 1

S401

S402

S403

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8904986 A1
- DE 102012000390 A1
- WO 2008089999 A1
- JP 2005201971 A
- US 6382789 B1

**In der Beschreibung aufgeführte Nicht-Patentliteratur**

- Lens Design. **C BROOKS.** Systems for Ophthalmic Dispensing. Elsevier, 01. Januar 2007
- **DARRYL MEISTER.** *Personalizes Lenses by Zeiss - Zeiss Individual Progressive Lenses: The Optics of Truly Customized Progressive Lenses*